# EUROPEAN PATENT SPECIFICATION

(11) **EP 1 377 858 B1**
(45) Date of publication and mention of the grant of the patent: **15.07.2009**
(21) Application number: 02725192.5
(22) Date of filing: 14.03.2002
(51) Int. Cl.: G02B 6/34

(54) **RECONFIGURABLE OPTICAL ADD-DROP MULTIPLEXERS**
UMKONFIGURIERBARE OPTISCHE ADD/DROP-MULTIPLEXER
MULTIPLEXEURS D'INSERTION-EXTRACTION OPTIQUES RECONFIGURABLES

(30) Priority: 19.03.2001 US 277217 P; 23.08.2001 US 938426; 07.11.2001 US 5714; 29.01.2002 US 60493; 14.02.2002 US 76145
(43) Date of publication of application: 07.01.2004
(73) Proprietor: Capella Photonics, Inc., San Jose, CA 95119 (US)
(72) Inventor: WILDE, Jeffrey, Morgan Hill, CA 95037 (US); MANSURIPUR, Masud, Tucson, AZ 85718 (US); GARRETT, Mark, H., Morgan Hill, CA 95037 (US); POLYNKIN, Pavel, G., Fremont, CA 94536 (US); BELSER, Karl, Arnold, San Jose, CA 95124 (US); CHEN, Tai, San Jose, CA 95135 (US)
(74) Representative: Gillard, Matthew Paul
(86) International application number: PCT/US2002/008046
(87) International publication number: WO 2002/075410

(56) References cited:
- WO-A-01/04674
- WO-A-01/11419
- US-A- 5 960 133
- US-A- 6 097 859
- US-A- 6 101 299
- US-B1- 6 263 135
- US-B1- 6 289 155
- US-B1- 6 418 250

## Description

### TECHNICAL FIELD

This invention relates generally to optical communication systems, and more specifically, optical wavelength-separating-routing apparatus.

### BACKGROUND

As fiber-optic communication networks rapidly spread into every walk of modem life, there is a growing demand for optical components and subsystems that enable the fiberoptic communications networks to be increasingly scalable, versatile, robust, and cost-effective. Contemporary fiber-optic communications networks commonly employ wavelength division multiplexing (WDM), for it allows multiple information (or data) channels to be simultaneously transmitted on a single optical fiber by using different wavelengths and thereby significantly enhances the information bandwidth of the fiber. The prevalence of WDM technology has made optical add-drop multiplexers indispensable building blocks of modem fiber-optic communication networks. An optical add-drop multiplexer (OADM) serves to selectively remove (or drop) one or more wavelengths from a multiplicity of wavelengths on an optical fiber, hence taking away one or more data channels from the traffic stream on the fiber. It further adds one or more wavelengths back onto the fiber, thereby inserting new data channels in the same stream of traffic. As such, an OADM makes it possible to launch and retrieve multiple data channels onto and from an optical fiber respectively, without disrupting the overall traffic flow along the fiber. Indeed, careful placement of the OADMs can dramatically improve an optical communication network's flexibility and robustness, while providing significant cost advantages.

Conventional OADMs in the art typically employ multiplexers/demultiplexers (e.g, waveguide grating routers or arrayed-waveguide gratings), tunable filters, optical switches, and optical circulators in a parallel or serial architecture to accomplish the add and drop functions. In the parallel architecture, as exemplified in U.S. Patent Number 5,974,207, a demultiplexer (e.g., a waveguide grating router) first separates a multi-wavelength signal into its constituent spectral components. A wavelength switching/routing means (e.g., a combination of optical switches and optical circulators) then serves to drop selective wavelengths and add others. Finally, a multiplexer combines the remaining (i.e., the pass-through) wavelengths into an output multi-wavelength optical signal. In the serial architecture, as exemplified in U.S. Patent Number 6,205,269, tunable filters (e.g., Bragg fiber gratings) in combination with optical circulators are used to separate the drop wavelengths from the pass-through wavelengths and subsequently launch the add channels into the pass-through path. If multiple wavelengths are to be added and dropped, additional multiplexers and demultiplexers are required to demultiplex the drop wavelengths and multiplex the add wavelengths, respectively. Irrespective of the underlying architecture, the OADMs currently in the art are characteristically high in cost, and prone to significant optical loss accumulation. Moreover, the designs of these OADMs are such that it is inherently difficult to reconfigure them in a dynamic fashion. U.S. Patent Number 6,204,946 of Askyuk et al. discloses an OADM that makes use of free-space optics in a parallel construction. In this case, a multi-wavelength optical signal emerging from an input port is incident onto a ruled diffraction grating. The constituent spectral channels thus separated are then focused by a focusing lens onto a linear array of binary micromachined mirrors. Each micromirror is configured to operate between two discrete states, such that it either retroreflects its corresponding spectral channel back into the input port as a pass-through channel, or directs its spectral channel to an output port as a drop channel. As such, the pass-through signal (i.e., the combined pass-through channels) shares the same input port as the input signal. An optical circulator is therefore coupled to the input port, to provide necessary routing of these two signals. Likewise, the drop channels share the output port with the add channels. An additional optical circulator is coupled to the output port. The drop channels exit from the output port and the add channels are introduced into the output port by way of the additional optical circulator. The add channels are subsequently combined with the pass-through signal by way of the diffraction grating and the binary micromirrors.

Although the aforementioned OADM disclosed by Askyuk et al. has the advantage of performing wavelength separating and routing in free space and thereby incurring less optical loss, it suffers a number of limitations. First, it requires that the pass-through signal share the same port/fiber as the input signal. An optical circulator therefore has to be implemented, to provide necessary routing of these two signals. Likewise, all of the add and drop channels enter and leave the OADM through the same output port, hence the need for the additional optical circulator. Moreover, additional means must be provided to multiplex the add channels before entering the system and to demultiplex the drop channels after exiting the system. This additional multiplexing/demultiplexing requirement adds more cost and complexity that can restrict the versatility of the OADM. Second, the optical circulators implemented in this OADM for various routing purposes introduce additional optical losses, which can accumulate to a substantial amount. Third, the constituent optical components must be in a precise alignment, in order for the system to achieve its intended purpose. There are, however, no provisions provided for maintaining the requisite alignment; and no mechanisms implemented for overcoming degradation in the alignment owing to environmental effects such as thermal and mechanical disturbances over the course of operation.

U.S. Patent Number 5,960,133 of Tomlinson discloses an OADM that makes use of a design similar to that of Aksyuk et al. In one embodiment, there are input, output, drop and add beams arranged in a rectangular array. Each micromirror, being switchable between two discrete positions, either reflects its corresponding wavelength component from the input beam back to the output beam, or concomitantly reflects the wavelength component from the input beam back to the drop beam and the same wavelength component from the add beam back to the output beam. Alternative embodiments are also shown, where multiple add and drop beams, along with input and output beams, are arranged in a two-dimensional array. However, as in the case of Askyuk et al., there are no provisions provided for maintaining requisite optical alignment in the system, and no mechanisms implemented for mitigating degradation in the alignment due to environmental effects over the course of operation. Moreover, it may be difficult in some applications to align multiple optical beams in a two-dimensional configuration and further maintain the requisite alignment.

As such, the prevailing drawbacks suffered by the OADMs currently in the art are summarized as follows:
1) The wavelength routing is intrinsically static, rendering it difficult to dynamically reconfigure these OADMs.
2) Add and/or drop channels often need to be multiplexed and/or demultiplexed, thereby imposing additional complexity and cost.
3) Stringent fabrication tolerance and painstaking optical alignment are required. Moreover, the optical alignment is not actively maintained, rendering it susceptible to environmental effects such as thermal and mechanical disturbances over the course of operation.
4) In an optical communication network, OADMs are typically in a ring or cascaded configuration. In order to mitigate the interference amongst OADMs, which often adversely affects the overall performance of the network, it is essential that the optical power levels of spectral channels entering and exiting each OADM be managed in a systematic way, for instance, by introducing power (or gain) equalization at each stage. Such a power equalization capability is also needed for compensating for non-uniform gain caused by optical amplifiers (e.g., erbium doped fiber amplifiers) in the network. There lacks, however, a systematic and dynamic management of the optical power levels of various spectral channels in these OADMs.
5) The inherent high cost and heavy optical loss further impede the wide application of these OADMs.

In view of the foregoing, there is an urgent need in the art for optical add-drop multiplexers that overcome the aforementioned shortcomings in a simple, effective, and economical construction.

US 6097859 and US 6101299 disclose optical cross-connect switches that operate to switch optical signals between different optic fibre inputs and outputs using an array of micromirrors which are individually controllable to control the optical paths between the fibre inputs and outputs.

### DISCLOSURE OF THE INVENTION

The invention consists in an optical wavelength-separating-routing apparatus comprising the features of claim 1.

In operation, a multi-wavelength optical signal emerges from the input port. The wavelength-separator separates the multi-wavelength optical signal into multiple spectral channels, each characterized by a distinct center wavelength and associated bandwidth. The channel micromirrors are positioned such that each channel micromirror receives a unique one of the spectral channels. The channel micromirrors are individually controllable and movable (e.g., pivotable or rotatable), so as to reflect the spectral channels into selected output ports. As such, each channel micromirror is assigned to a specific spectral channel, hence the name "channel micromirror". Each output port may receive any number of the reflected spectral channels.

A distinct feature of the channel micromirrors in the present invention, is that the pivoting (or rotational) motion of each channel micromirror may be under analog control such that its pivoting angle can be continuously adjusted. This enables each channel micromirror to scan its corresponding spectral channel across all possible output ports and thereby direct the spectral channel to any desired output port.

In the WSR apparatus of the present invention, the wavelength-separator may be provided by a ruled diffraction grating, a holographic diffraction grating, an echelle grating, a curved diffraction grating, a transmission grating, a dispersing prism, or other types of wavelength-separating means known in the art. The beam-focuser may be a single lens, an assembly of lenses, or other types of beam-focusing means known in the art. The channel micromirrors may be provided by silicon micromachined mirrors, reflective ribbons (or membranes), or other types of beam-deflecting means known in the art. Each channel micromirror may be pivotable about one or two axes. The fiber collimators serving as the input and output ports may be arranged in a one-dimensional or two-dimensional array. In the latter case, the channel micromirrors are pivotable biaxially.

The servo-control assembly serves to monitor the optical power levels of the spectral channels coupled into the output ports and further provide control of the channel micromirrors on an individual basis, so as to maintain a predetermined coupling efficiency for each spectral channel into an output port. The servo-control assembly may additionally provide dynamic control of the collimator-alignment mirrors. As such, the servo-control assembly provides dynamic control of the coupling of the spectral channels into the respectively output ports and thereby actively manages the optical power levels of the spectral channels coupled into the output ports. For example, the optical power levels of the spectral channels coupled into the output ports can be equilized at a predetermined value. Moreover, the utilization of such a servo-control assembly effectively relaxes the fabrication tolerances and precision during assembly of a WSR apparatus of the present invention, and further enables the system to correct for shift in optical alignment that may arise over the course of operation. A WSR apparatus incorporating a servo-control assembly thus described is termed a WSR-S apparatus, in the following discussion.

The WSR apparatus of the invention may further employ a polarization diversity arrangement to overcome polarization-sensitive effects the constituent optical elements may possess. A polarization-rotating unit (e.g., one or more birefringent beam displacers) and a polarization-rotating unit (e.g., one or more half-wave plates) may be disposed along the optical path between the fiber collimators providing the input and output ports and the wavelength-separator. The polarization-displacing unit serves to decompose the multi-wavelength input optical signal into first and second polarization components. The polarization-rotating unit may subsequently rotate the polarization of the second polarization component (e.g., by 90-degrees), so that its polarization is substantially parallel to the first polarization component. The wavelength-separator separates the incident optical signals by wavelength into first and second sets of optical beams, respectively. The beam-focuser may focus the first and second sets of optical beams into corresponding focused spots, impinging onto the channel micromirrors. The first and second optical beams associated with the same wavelength may impinge onto (and be manipulated by) the same channel micromirror. The channel micromirrors may be individually controlled such that the first and second sets of optical beams are deflected upon reflection. The reflected first set of optical beams may subsequently undergo a 90-degree rotation in polarization by the polarization-rotating unit. This enables the polarization-displacing unit to recombine the reflected first and second sets of optical beams by wavelength respectively into reflected spectral channels, prior to being coupled into the output ports.

As such, the aforementioned polarization diversity arrangement effectively renders the polarization-sensitive effects inconsequential and thereby lowers the insertion loss and polarization-dependent loss of the system.

Accordingly, the WSR (or WSR-S) apparatus of the present invention may be used to construct a variety of optical devices, including a novel class of dynamically reconfigurable optical add-drop multiplexers (OADMs).

In one embodiment of an OADM according to the present invention, a one-dimensional input-output-port array, including an input port, a pass-through port, a plurality of drop ports, and a plurality of add ports, may be implemented in a WSR of the present invention. The arrangement of the input-output-port array may be such that the input ports (i.e., the input port and the add ports) transmitting the incoming optical signals and the output ports (i.e., the pass-through and the drop ports) carrying the outgoing optical signal are positioned in an alternating (or interleaved) fashion, whereby interposed between every two input ports is an output port, and vice versa. Such an arrangement warrants that if a spectral channel originating from the input port is to be routed to a drop port, an add spectral channel with the same wavelength from an adjacent (or pairing) add port can be simultaneously directed into the pass-through port. This is due to the fact that the drop spectral channel and the corresponding add spectral channel are routed to their respective destinations by the same channel micromirror in the WSR apparatus.

A notable advantage of the aforementioned OADM is the ability to add and drop multiple spectral channels in a dynamically reconfigurable fashion, without involving additional means. A servo-control assembly may be further incorporated in an OADM of the present invention, for monitoring and controlling the optical power levels of the spectral channels coupled into the output ports.

An alternative embodiment of an OADM of the present invention comprises a WSR (or WSR-S) apparatus and an optical combiner. The output ports of the WSR apparatus include a pass-through port and one or more drop ports, each carrying any number of the spectral channels. The optical combiner is coupled to the pass-through port, serving to combine the pass-through channels with one or more add spectral channels. The combined optical signal constitutes an output signal of the system. The optical combiner may be an N×1 (N ≥ 2) broadband fiber-optic coupler, for instance, which may also serve the purpose of multiplexing a multiplicity of add spectral channels to be coupled into the system.

In yet another embodiment of an OADM of the present invention, a first WSR (or WSR-S) apparatus is cascaded with a second WSR (or WSR-S) apparatus. The output ports of the first WSR apparatus include a pass-through port and one or more drop ports. The second WSR apparatus includes a plurality of input ports and an exiting port. The configuration is such that the pass-through channels from the first WSR apparatus and one or more add channels are directed into the input ports of the second WSR apparatus, and consequently multiplexed into an output multi-wavelength optical signal directed into the exiting port of the second WSR apparatus. That is to say that in this embodiment, one WSR apparatus (e.g., the first one) effectively performs a dynamic drop function, whereas the other WSR apparatus (e.g., the second one) carries out a dynamic add function. And there are essentially no fundamental restrictions on the wavelengths that can be added or dropped, other than those imposed by the overall communication system. Moreover, the underlying OADM architecture thus presented is intrinsically scalable and can be readily extended to any number of the WSR (or WSR-S) systems, if so desired for performing intricate add and drop functions in a network environment.

The OADMs of the present invention provide many advantages over the prior devices, notably:
1) By advantageously employing an array of channel micromirrors that are individually and continuously controllable, an OADM of the present invention is capable of routing the spectral channels on a channel-by-channel basis and directing any spectral channel into any one of multiple output ports. As such, its underlying operation is dynamically reconfigurable, and its underlying architecture is intrinsically scalable to a large number of channel counts, as well as to multiple input and output ports.
2) The add and drop spectral channels need not be multiplexed and demultiplexed before entering and after leaving the OADM, respectively. And there are not fundamental restrictions on the wavelengths to be added or dropped.
3) The coupling of the spectral channels into the output ports is dynamically controlled by a servo-control assembly, rendering the OADM less susceptible to environmental effects (such as thermal and mechanical disturbances) and therefore more robust in performance. By maintaining an optimal optical alignment, the optical losses incurred by the spectral channels are also significantly reduced.
4) The optical power levels of the spectral channels coupled into the pass-through port may be dynamically managed according to demand, or maintained at desired values (e.g., equalized at a predetermined value) by way of the servo-control assembly. The optical power levels of the spectral channels coupled into the drop ports may also be monitored by the servo-control assembly. This spectral power-management capability as an integral part of the OADM will be particularly desirable in WDM optical networking applications.
5) The use of free-space optics provides a simple, low loss, and cost-effective construction. Moreover, the utilization of the servo-control assembly effectively relaxes the fabrication tolerances and precision during initial assembly, enabling the OADM to be simpler and more adaptable in structure, and lower in cost and optical loss.
6) The underlying OADM architecture allows a multiplicity of the OADMs according to the present invention to be readily assembled (e.g., cascaded) for WDM optical networking applications.

The novel features of this invention, as well as the invention itself, will be best understood from the following drawings and detailed description.

### BRIEF DESCRIPTION OF THE FIGURES

FIGS. **1A-1D** show a first embodiment of a wavelength-separating-routing (WSR) apparatus according to the present invention, and the modeling results demonstrating the performance of the WSR apparatus;
FIG. **2A** depicts a second embodiment of a WSR apparatus according to the present invention;
FIGS. **2B-2C** show a third embodiment of a WSR apparatus according to the present invention;
FIG. **3** depicts a fourth embodiment of a WSR apparatus according to the present invention;
FIGS. **4A-4B** show schematic illustrations of two embodiments of a WSR-S apparatus comprising a WSR apparatus and a servo-control assembly, according to the present invention;
FIGS. **5A-5B** depict a first embodiment of an optical add-drop multiplexer (OADM) according to the present invention;
FIGS. **5C-5D** show a second embodiment of an OADM according to the present invention;
FIG. **5E** shows an exemplary embodiment of an OADM employing a servo-control assembly, according to the present invention;
FIG. **6A** depicts a third embodiment of an OADM according to the invention;
FIG. **6B** shows a fourth embodiment of an OADM according to the invention;
FIGS. **7A-7B** depict a fifth embodiment of a WSR apparatus according to the present invention, employing a polarization diversity arrangement;
FIGS. **7C-7D** depict two exemplary embodiments of a polarization-displacing unit that may be used in the WSR apparatus shown in FIGS. **7A-7B****;**
FIG. **8A** shows a sixth embodiment of a WSR apparatus according to the present invention, employing a polarization diversity arrangement;
FIG. **8B** depicts a seventh embodiment of a WSR apparatus according to the present invention, employing a polarization diversity arrangement; and
FIG. **8C** shows an eighth embodiment of a WSR apparatus according to the present invention, employing a polarization diversity arrangement.

### DETAILED DESCRIPTION

In this specification and appending claims, a "spectral channel" is characterized y a distinct center wavelength and associated bandwidth. Each spectral channel may carry a unique information signal, as in WDM optical networking applications.

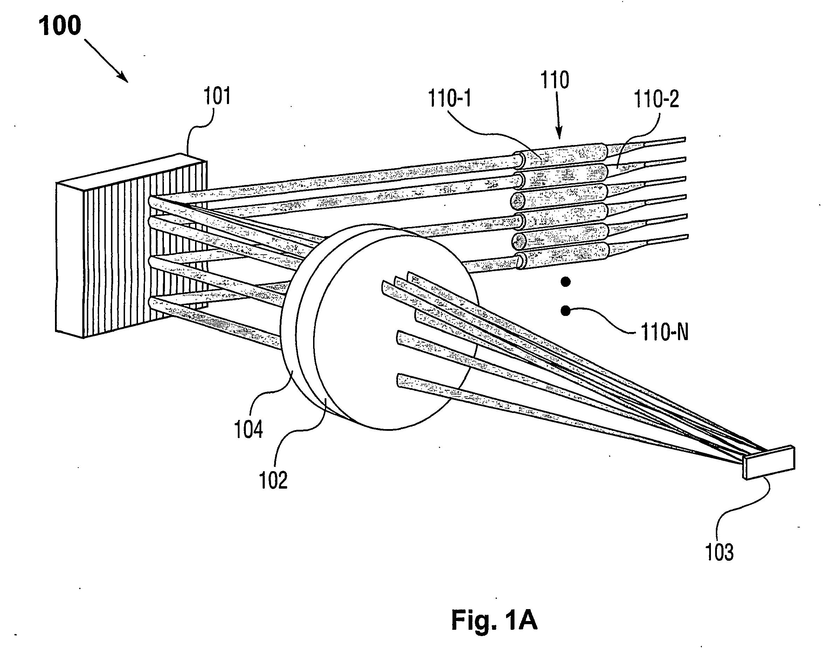

FIG. **1A** depicts a perspective view of a first embodiment of a wavelength-separating-routing (WSR) apparatus according to the present invention. By way of example to illustrate the general principles and the topological structure of a wavelength-separating-routing (WSR) apparatus of the present invention, the WSR apparatus **100** comprises multiple input/output ports which may be in the form of an array of fiber collimators **110,** providing an input port **110-1** and a plurality of output ports **110-2** through **110-N** (N ≥ 3); a wavelength-separator which in one form may be a diffraction grating **101;** a beam-focuser in the form of a focusing lens **102;** and an array of channel micromirrors **103.**

In operation, a multi-wavelength optical signal emerges from the input port **110-1.** The diffraction grating **101** angularly separates the multi-wavelength optical signal into multiple spectral channels, which are in turn focused by the focusing lens **102** into a spatial array of corresponding focused spots (not shown in **FIG. 1A**). The channel micromirrors **103** are positioned in accordance with the spatial array formed by the spectral channels, such that each channel micromirror receives a unique one of the spectral channels. The channel micromirrors **103** are individually controllable and movable, e.g., pivotable (or rotatable) under analog (or continuous) control, such that, upon reflection, the spectral channels are directed into selected ones of the output ports **110-2** through **110-N** by way of the focusing lens **102** and the diffraction grating **101.** As such, each channel micromirror is assigned to a specific spectral channel, hence the name "channel micromirror". Each output port may receive any number of the reflected spectral channels.

For purposes of illustration and clarity, only a select few (e.g., three) of the spectral channels, along with the input multi-wavelength optical signal, are graphically illustrated in FIG. **1A** and the following figures. It should be noted, however, that there can be any number of the spectral channels in a WSR apparatus of the present invention (so long as the number of spectral channels does not exceed the number of channel mirrors employed in the system). It should also be noted that the optical beams representing the spectral channels shown in FIG. **1A** and the following figures are provided for illustrative purpose only. That is, their sizes and shapes may not be drawn according to scale. For instance, the input beam and the corresponding diffracted beams generally may have different cross-sectional shapes, so long as the angle of incidence upon the diffraction grating is not equal to the angle of diffraction, as is known to those skilled in the art.

In the embodiment of FIG. **1A**, it is preferable that the diffraction grating **101** and the channel micromirrors **103** are placed respectively in the first and second (i.e., the front and back) focal planes (on the opposing sides) of the focusing lens **102.** Such a telecentric arrangement allows the chief rays of the focused beams to be parallel to each other and generally parallel to the optical axis. In this application, the telecentric configuration further allows the reflected spectral channels to be efficiently coupled into the respective output ports, thereby minimizing various translational "walk-off effects" that may otherwise arise. Moreover, the multi-wavelength input optical signal is preferably collimated and circular in cross-section. The corresponding spectral channels diffracted from the diffraction grating **101** are generally elliptical in cross-section, e.g., they may be of the same size as the input beam in one dimension and elongated in the other dimension.

It is known that the diffraction efficiency of a diffraction grating is generally polarization-dependent. For instance, the diffraction efficiency of a grating in a standard mounting configuration may be considerably higher for p (or TM) polarization (perpendicular to the groove lines on the grating) than for s (or TE) polarization (orthogonal to p-polarization), or vice versa. To mitigate such polarization-sensitive effects, a quarter-wave plate **104** may be optically interposed between the diffraction grating **101** and the channel micromirrors **103,** and preferably placed between the diffraction grating **101** and the focusing lens **102** as is shown in FIG. **1A****.** In this way, each spectral channel experiences a total rotation in polarization of approximately 90-degrees upon traversing the quarter-wave plate **104** twice. (That is, if an optical beam has p-polarization when first encountering the diffraction grating, it would have predominantly (if not all) s-polarization upon the second encountering, and vice versa.) This ensures that all the spectral channels incur nearly the same amount of "round-trip" polarization dependent loss.

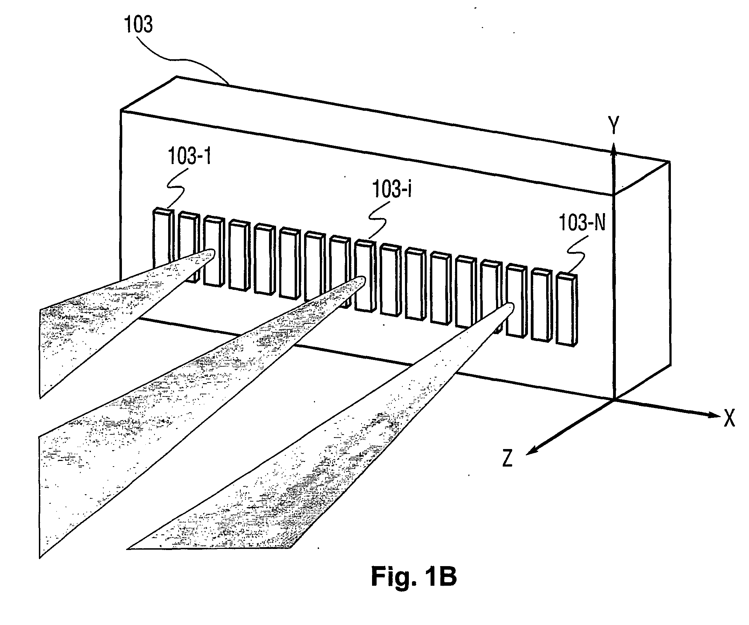

In the WSR apparatus **100** of FIG. **1A****,** the diffraction grating **101,** by way of example, is oriented such that the focused spots of the spectral channels fall onto the channel micromirrors **103** in a horizontal array, as illustrated in FIG. **1B****.**

Depicted in FIG. **1B** is a close-up view of the channel micromirrors **103** shown in the embodiment of FIG. **1A****.** By way of example, the channel micromirrors **103** are arranged in a one-dimensional array along the x-axis (i.e., the horizontal direction in the figure), so as to receive the focused spots of the spatially separated spectral channels in a one-to-one correspondence. (As in the case of FIG. **1A**, only three spectral channels are illustrated, each represented by a converging beam.) The reflective surface of each channel micromirror lies in the **x-y** plane as defined in the figure and may be movable, e.g., pivotable (or deflectable) about an axis along the **x**-direction in an analog (or continuous) manner. Each spectral channel, upon reflection, is deflected in the **y**-direction (e.g., downward) relative to its incident direction, so as to be directed into one of the output ports **110-2** through **110-N** shown in FIG. **1A****.**

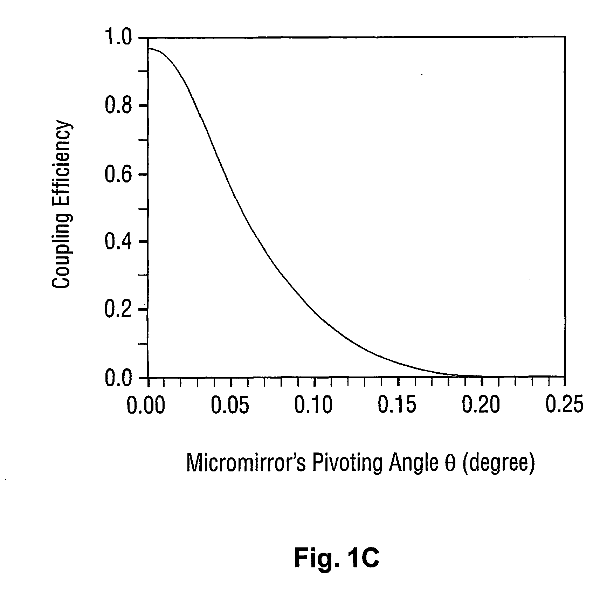

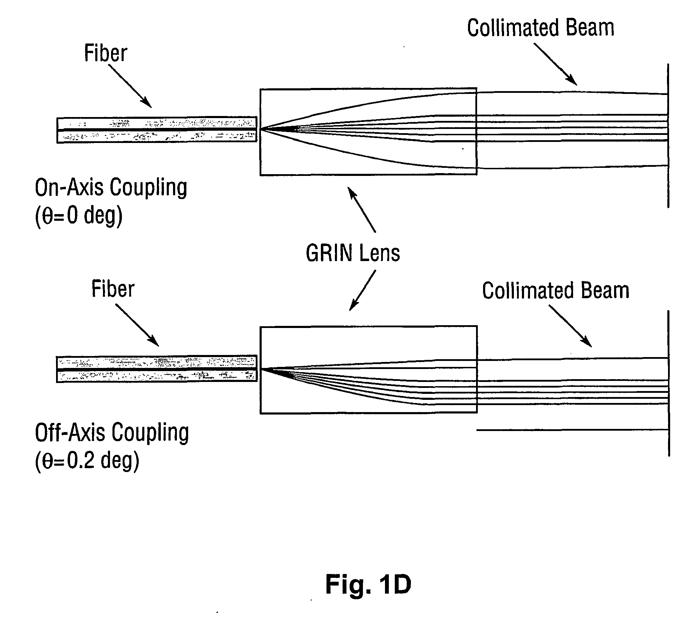

As described above, a unique feature of the present invention is that the motion of each channel micromirror is individually and continuously controllable, such that its position, e.g., pivoting angle, can be continuously adjusted. This enables each channel micromirror to scan its corresponding spectral channel across all possible output ports and thereby direct the spectral channel to any desired output port. To illustrate this capability, FIG. **1C** shows a plot of coupling efficiency as a function of a channel micromirror's pivoting angle θ, provided by a ray-tracing model of a WSR apparatus in the embodiment of FIG. **1A**. As used herein, the coupling efficiency for a spectral channel is defined as the ratio of the amount of optical power coupled into the fiber core in an output port to the total amount of optical power incident upon the entrance surface of the fiber (associated with the fiber collimator serving as the output port). In the ray-tracing model, the input optical signal is incident upon a diffraction grating with 700 lines per millimeter at a grazing angle of 85 degrees, where the grating is blazed to optimize the diffraction efficiency for the "-1" order. The focusing lens has a focal length of 100 mm. Each output port is provided by a quarter-pitch GRIN lens (2 mm in diameter) coupled to an optical fiber (see FIG. **1D**). As displayed in FIG. **1C**, the coupling efficiency varies with the pivoting angle θ, and it requires about a 0.2-degree change in θ for the coupling efficiency to become practically negligible in this exemplary case. As such, each spectral channel may practically acquire any coupling efficiency value by way of controlling the pivoting angle of its corresponding channel micromirror. This is also to say that variable optical attenuation at the granularity of a single wavelength can be obtained in a WSR apparatus of the present invention. FIG. **1D** provides ray-tracing illustrations of two extreme points on the coupling efficiency vs. θ curve of FIG. **1C**: on-axis coupling corresponding to θ = 0, where the coupling efficiency is maximum; and off-axis coupling corresponding to θ = 0.2 degrees, where the representative collimated beam (representing an exemplary spectral channel) undergoes a significant translational walk-off and renders the coupling efficiency practically negligible. The exemplary modeling results thus described demonstrate the unique capabilities of the WSR apparatus of the present invention.

FIG. **1A** provides one of many embodiments of a WSR apparatus according to the present invention. In general, the wavelength-separator is a wavelength-separating means that may be a ruled diffraction grating, a holographic diffraction grating, an echelle grating, a dispersing prism, or other types of spectral-separating means known in the art. The beam-focuser may be a focusing lens, an assembly of lenses, or other beam-focusing means known in the art. The focusing function may also be accomplished by using a curved diffraction grating as the wavelength-separator. The channel micromirrors may be provided by silicon micromachined mirrors, reflective ribbons (or membranes), or other types of beam-deflecting elements known in the art. Each micromirror may be pivoted about one or two axes. It is important that the pivoting (or rotational) motion of each channel micromirror be individually controllable in an analog manner, whereby the pivoting angle can be continuously adjusted so as to enable the channel micromirror to scan a spectral channel across all possible output ports. The underlying fabrication techniques for micromachined mirrors and associated actuation mechanisms are well documented in the art, see U.S. Patent Number 5,629,790 for example, which is fully and completely incorporated herein by reference. Moreover, a fiber collimator is typically in the form of a collimating lens (such as a GRIN lens) and a ferrule-mounted fiber packaged together in a mechanically rigid stainless steel (or glass) tube. The fiber collimators serving as the input and output ports may be arranged in a one-dimensional array, a two-dimensional array, or other desired spatial pattern. For instance, they may be conveniently mounted in a linear array along a V-groove fabricated on a substrate made of silicon, plastic, or ceramic, as commonly practiced in the art. It should be noted, however, that the input port and the output ports need not necessarily be in close spatial proximity with each other, such as in an array configuration (although a close packing would reduce the rotational range required for each channel micromirror). Those skilled in the art will know how to design a WSR apparatus according to the present invention, to best suit a given application.

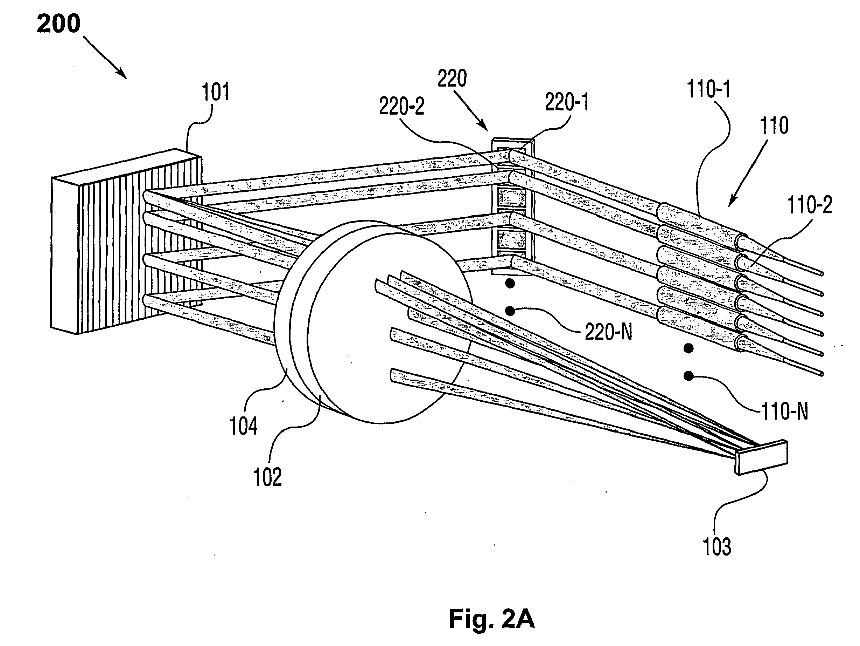

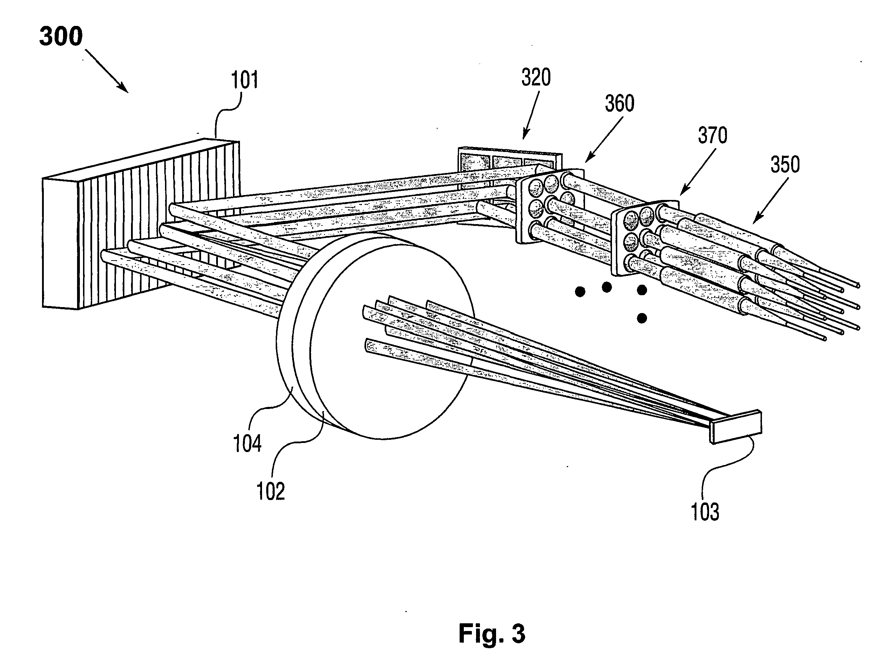

A WSR apparatus of the present invention may further comprise an array of collimator-alignment mirrors, for adjusting the alignment of the input multi-wavelength optical signal and facilitating the coupling of the spectral channels into the respective output ports, as shown in FIGS. **2A-2B** and **3.**

Depicted in FIG. **2A** is a second embodiment of a WSR apparatus according to the present invention. By way of example, WSR apparatus **200** is built upon and hence shares a number of the elements used in the embodiment of FIG. **1A**, as identified by those elements labeled with identical numerals. Moreover, a one-dimensional array **220** of collimator-alignment mirrors **220-1** through **220-N** is optically interposed between the diffraction grating **101** and the fiber collimator array **110.** The collimator-alignment mirror **220-1** is designated to correspond with the input port **110-1,** for adjusting the alignment of the multi-wavelength input optical signal and therefore ensuring that the spectral channels impinge onto the corresponding channel micromirrors. The collimator-alignment mirrors **220-2** through **220-N** are designated to the output ports **110-2** through **110-N** in a one-to-one correspondence, serving to provide angular control of the collimated beams of the reflected spectral channels and thereby facilitating the coupling of the spectral channels into the respective output ports according to desired coupling efficiencies. Each collimator-alignment mirror may be rotatable about one axis, or two axes.

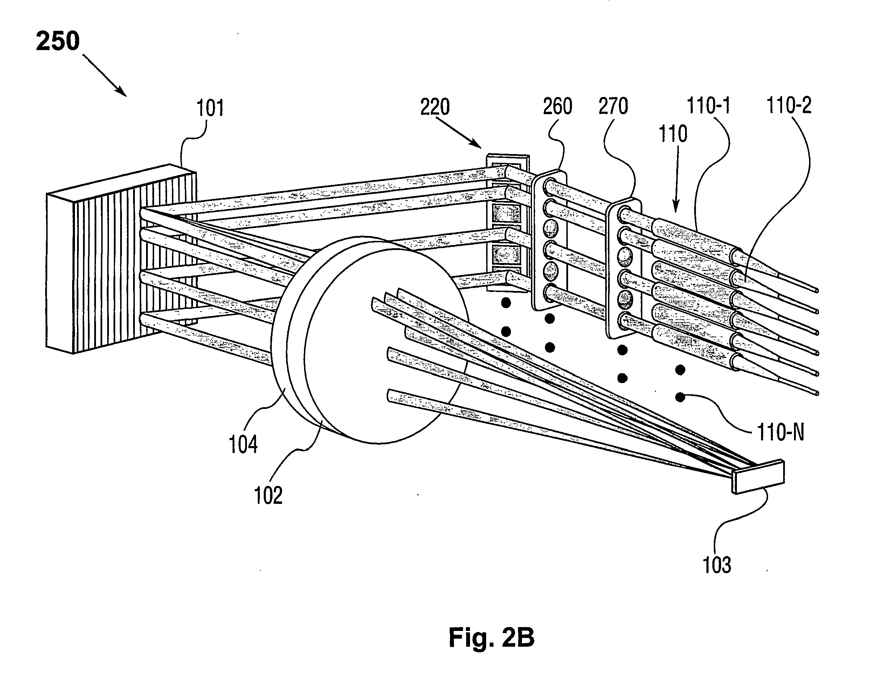

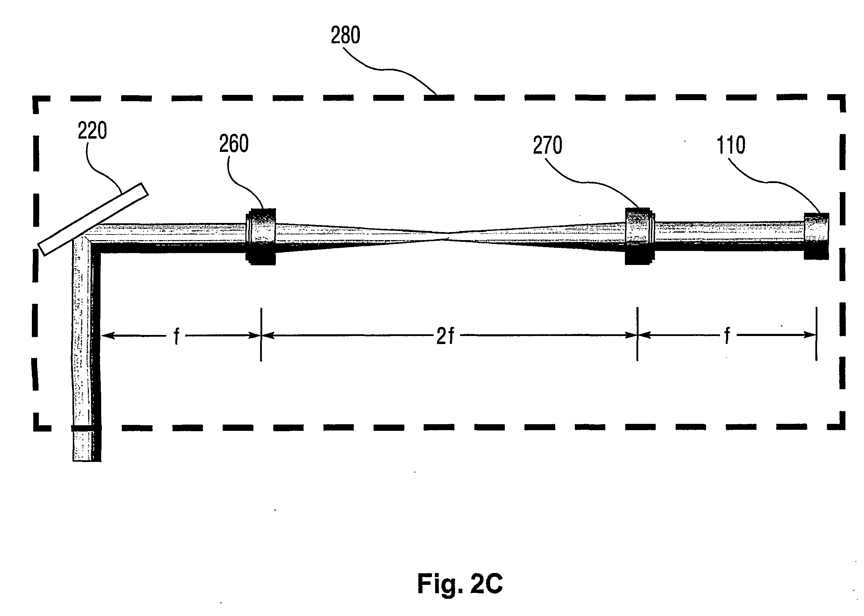

The embodiment of FIG. **2A** is attractive in applications where the fiber collimators (serving as the input and output ports) are desired to be placed in close proximity to the collimator-alignment mirror array **220.** To best facilitate the coupling of the spectral channels into the output ports, imaging lenses may be implemented between the collimator-alignment mirror array **220** and the fiber collimator array **110,** as depicted in FIG. **2B**. By way of example, WSR apparatus **250** of FIG. **2B** is built upon and hence shares many of the elements used in the embodiment of FIG. **2A****,** as identified by those elements labeled with identical numerals. Additionally, first and second arrays **260, 270** of imaging lenses are placed in a "4-f" telecentric arrangement with respect to the collimator-alignment mirror array **220** and the fiber collimator array **110.** The dashed box **280** shown in FIG. **2C** provides a top view of the "4-f" telecentric arrangement. In this case, the imaging lenses in the first and second arrays **260, 270** all have the same focal length **f**. The collimator-alignment mirrors **220-1** through **220-N** are placed at the respective first (or front) focal points of the imaging lenses in the first array **260.** Likewise, the fiber collimators **110-1** through **110-N** are placed at the respective second (or back) focal points of the imaging lenses in the second array **270.** The separation between the first and second arrays **260, 270** of imaging lenses is **2f**. In this way, the collimator-alignment mirrors **220-1** through **220-N** are effectively imaged onto the respective entrance surfaces (i.e., the front focal planes) of the GRIN lenses in the corresponding fiber collimators **110-1** through **110-N**. Such a "4-f" imaging system substantially eliminates translational walk-off of the collimated beams at the output ports that may otherwise occur as the mirror angles change.

FIG. **3** shows a fourth embodiment of a WSR apparatus according to the present invention. By way of example, WSR apparatus **300** is built upon and hence shares a number of the elements used in the embodiment of FIG. **2B**, as identified by those elements labeled with identical numerals. In this case, the one-dimensional fiber collimator array **110** of FIG. **2B** is replaced by a two-dimensional array **350** of fiber collimators, providing for an input-port and a plurality of output ports. Accordingly, the one-dimensional collimator-alignment mirror array **220** of FIG. **2B** is replaced by a two-dimensional array **320** of collimator-alignment mirrors, and first and second one-dimensional arrays **260, 270** of imaging lenses of FIG. **2B** are likewise replaced by first and second two-dimensional arrays **360, 370** of imagining lenses, respectively. As in the case of the embodiment of FIG. **2B**, the first and second two-dimensional arrays **360, 370** of imaging lenses are placed in a substantially identical "4-f" telecentric arrangement with respect to the two-dimensional collimator-alignment mirror array **320** and the two-dimensional fiber collimator array **350.** Each of the channel micromirrors **103** may be pivotable biaxially in this case, in order to direct its corresponding spectral channel to any one of the output ports. As such, the WSR apparatus **300** is equipped to support a greater number of output ports.

In addition to facilitating the coupling of the spectral channels into the respective output ports as described above, the collimator-alignment mirrors in the above embodiments also serve to compensate for misalignment (e.g., due to fabrication and assembly errors) in the fiber collimators that provide for the input and output ports. For instance, relative misalignment between the fiber cores and their respective collimating lenses in the fiber collimators can lead to pointing errors in the collimated beams, which may be corrected for by the collimator-alignment mirrors. For these reasons, the collimator-alignment mirrors are preferably rotatable about two axes. They may be silicon micromachined mirrors, for fast rotational speeds. They may also be other types of mirrors or beam-deflecting elements known in the art.

To optimize the coupling of the spectral channels into the output ports and further maintain the optimal optical alignment against environmental effects such as temperature variations and mechanical instabilities over the course of operation, a WSR apparatus of the present invention may incorporate a servo-control assembly, for providing dynamic control of the coupling of the spectral channels into the respective output ports on a channel-by-channel basis. A WSR apparatus incorporating a servo-control assembly is termed a WSR-S apparatus in this specification.

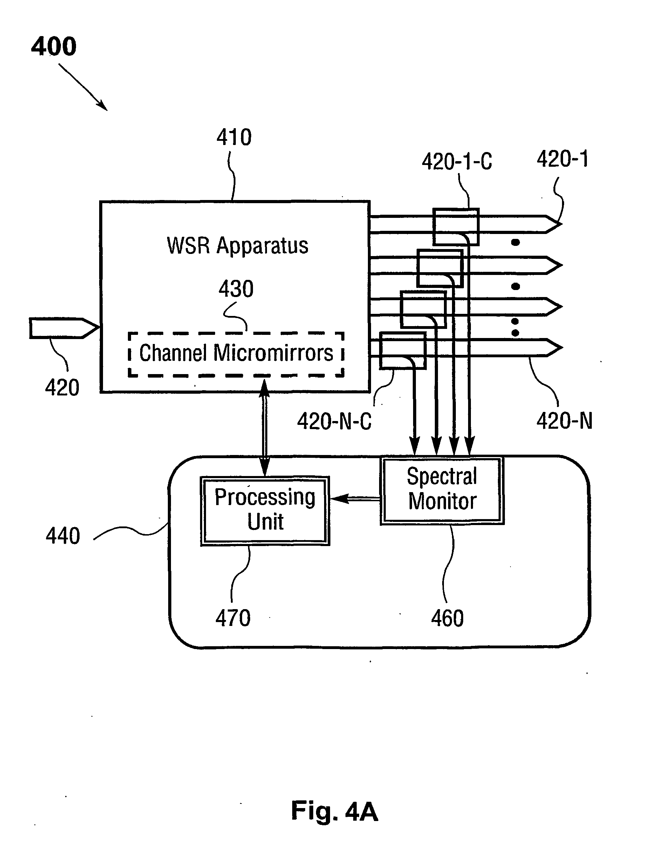

FIG. **4A** depicts a schematic illustration of a first embodiment of a WSR-S apparatus according to the present invention. The WSR-S apparatus **400** comprises a WSR apparatus **410** and a servo-control assembly **440.** The WSR apparatus **410** may be substantially similar to the WSR apparatus **100** of FIG. **1A**, or any other embodiment in accordance with the present invention. The servo-control assembly **440** includes a spectral power monitor **460,** for monitoring the optical power levels of the spectral channels coupled into the output ports **420-1** through **420-N** of the WSR apparatus **410.** according to the invention, the spectral power monitor **460** is coupled to the output ports **420-1** through **420-N** by way of fiber-optic couplers **420-1-C** through **420-N-C,** wherein each fiber-optic coupler serves to "tap off' a predetermined fraction of the optical signal in the corresponding output port. The servo-control assembly **440** further includes a processing unit **470,** in communication with the spectral power monitor **460** and the channel micromirrors **430** of the WSR apparatus **410.** The processing unit **470** uses the optical power measurements from the spectral power monitor **460** to provide feedback control of the channel micromirrors **430** on an individual basis, so as to maintain a desired coupling efficiency for each spectral channel into a selected output port.

By way of example, the processing unit **470** may apply an appropriate alternating (or "dither") control signal to a channel micromirror, in superposition with the dc control signal for maintaining the channel micromirror at a particular pivoting position. This enables both the optical power level of the corresponding spectral channel and the rate of change in the optical power level (or the time derivative of the optical power level) at the instant micromirror's pivoting angle to be obtained. In view of the exemplary coupling efficiency curve depicted in FIG. **1C**, the rate of change in the optical power level is proportional to the slope of the coupling efficiency curve, and is therefore useful in locating the micromirror's pivoting angle corresponding to the measured optical power level. It is also useful in determining the magnitude of the feedback control signal to be applied to the channel micromirror, so as to achieve the desired coupling efficiency in a most effective manner. From the teachings of the present invention, a skilled artisan will know how to devise an appropriate servo control scheme, to best suit a given application.

As such, the servo-control assembly **440** provides dynamic control of the coupling of the spectral channels into the respective output ports on a channel-by-channel basis and thereby manages the optical power levels of the spectral channels coupled into the output ports. The optical power levels of the spectral channels in the output ports may be dynamically managed according to demand, or maintained at desired values (e.g., equalized at a predetermined value) in the present invention. Such a spectral power-management capability is essential in WDM optical networking applications, as discussed above.

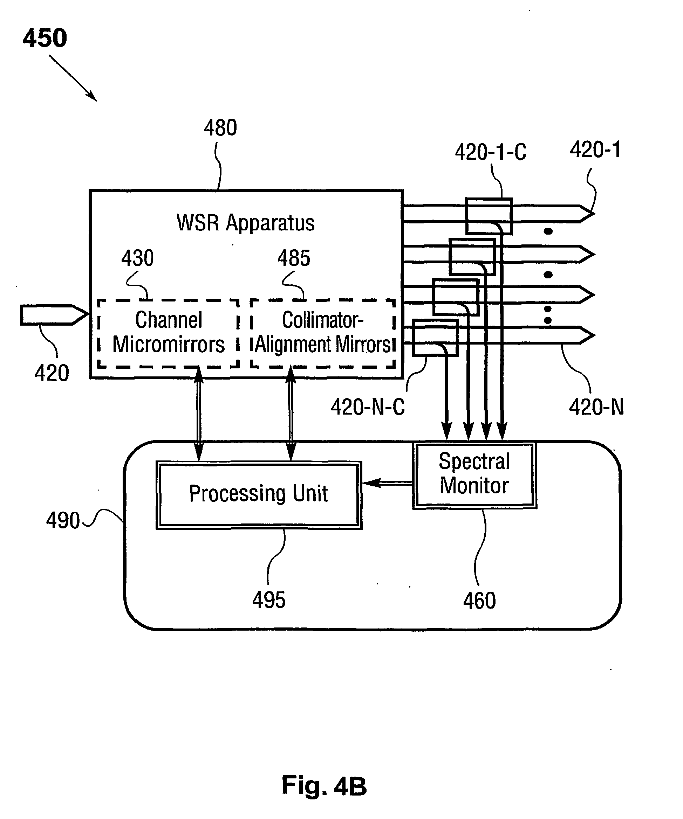

FIG. **4B** depicts a schematic illustration of a second embodiment of a WSR-S apparatus according to the present invention. The WSR-S apparatus **450** comprises a WSR apparatus **480** and a servo-control assembly **490.** In addition to the channel micromirrors **430** (and other elements identified by the same numerals as those used in FIG. **4A**), the WSR apparatus **480** further includes a plurality of collimator-alignment mirrors **485,** and may be configured according to the embodiment of FIG. **2A****,** **2B****,** **3**, or any other embodiment in accordance with the present invention. By way of example, the servo-control assembly **490** includes the spectral power monitor **460** as described in the embodiment of FIG. **4A****,** and a processing unit **495.** In this case, the processing unit **495** is in communication with the channel micromirrors **430** and the collimator-alignment mirrors **485** of the WSR apparatus **480,** as well as the spectral power monitor **460.** The processing unit **495** uses the optical power measurements from the spectral power monitor **460** to provide dynamic control of the channel micromirrors **430** along with the collimator-alignment mirrors **485,** so as to maintain the coupling efficiencies of the spectral channels into the output ports at desired values. The underlying operating principle of the processing unit **495** may be substantially similar to that of processing unit **470,** as described above.

In the embodiment of FIG. **4A** or **4B**, the spectral power monitor **460** may be one of spectral power monitoring devices known in the art that is capable of detecting the optical power levels of spectral components in a multi-wavelength optical signal. Such devices are typically in the form of a wavelength-separating means (e.g., a diffraction grating) that spatially separates a multi-wavelength optical signal by wavelength into constituent spectral components, and one or more optical sensors (e.g., an array of photodiodes) that are configured such to detect the optical power levels of these spectral components. The processing unit **470** in FIG. **4A** (or the processing unit **495** in FIG. **4B**) typically includes electrical circuits and signal processing programs for processing the optical power measurements received from the spectral power monitor **460** and generating appropriate control signals to be applied to the channel micromirrors **430** (and the collimator-alignment mirrors **485** in the case of FIG. **4B**), so as to maintain the coupling efficiencies of the spectral channels into the output ports at desired values. The electronic circuitry and the associated signal processing algorithm/software for such a processing unit in a servo-control system are known in the art. Those skilled in the art will know how to implement a suitable spectral power monitor along with an appropriate processing unit to provide a servo-control assembly in a WSP-S apparatus according to the present invention, for a given application.

The incorporation of a servo-control assembly provides additional advantages of effectively relaxing the requisite fabrication tolerances and the precision of optical alignment during initial assembly of a WSR apparatus of the present invention, and further enabling the system to correct for shift in the alignment that may arise over the course of operation. By maintaining an optimal optical alignment, the optical losses incurred by the spectral channels are also significantly reduced. As such, the WSR-S apparatus thus constructed is simpler and more adaptable in structure, more robust in performance, and lower in cost and optical loss. Accordingly, the WSR-S (or WSR) apparatus of the present invention may be used to construct a variety of optical devices, including a novel class of optical add-drop multiplexers (OADMs) for WDM optical networking applications.

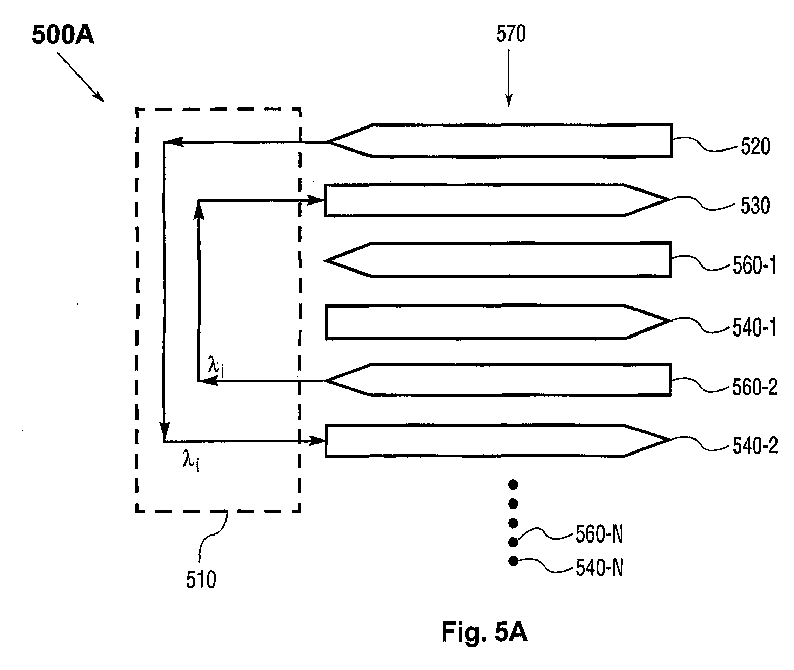

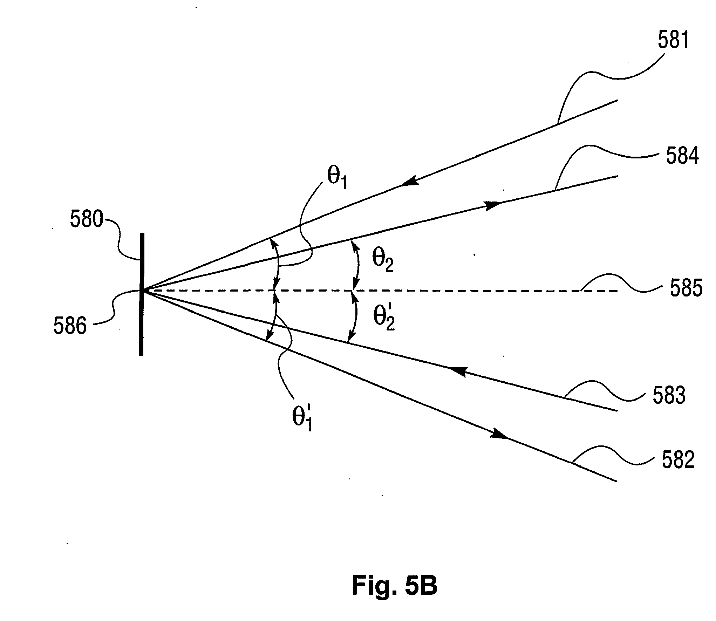

FIGS. **5A-5B** depict a first embodiment of an optical add-drop multiplexer (OADM) of the present invention. Shown in FIG. **5A** is a schematic view of OADM **500A** according to the present invention, which only illustrates the input and output ports of a WSR apparatus, along with a plurality of add ports. The remainder of the WSR apparatus is schematically represented by a dashed box **510,** for purpose of simplicity and clarity. The WSR apparatus in this case may be constructed according to the embodiment of FIG. **1A****,** **2A****,** **2B**, **3****,** or any other configuration in accordance with the present invention. By way of example, an input port **520,** a pass-through port **530,** and a plurality of drop ports **540-1** through **540-N** may be arranged, along with a plurality of add ports **560-1** through **560-N,** in a one-dimensional input-output-port array **570.** The arrangement of the input-output-port array **570** may be such that the input ports (e.g., the input port **520** and the add ports) transmitting the incoming optical signals and the output ports (e.g., the pass-through **530** and the drop ports) carrying the outgoing optical signals are positioned in an alternating (or interleaved) fashion, whereby interposed between every two input ports is an output port, and vice versa. Such an arrangement warrants that if a spectral channel λ**ᵢ** originating from the input port **520** is to be routed to a drop port, such as the drop port **540-2,** by way of the optical system in the dashed box **510,** an add spectral channel with the same wavelength λ**ᵢ** emerging from an adjacent add port **560-2** can be directed into the pass-through port **530** by the same optical system in the dashed box **510.** This is due to the fact that the drop spectral channel and the corresponding add spectral channel are routed to their respective destinations by the same channel micromirror in the dashed box **510,** as to be shown in further detail in FIG. **5B****.** (Note: in view of the functionality thus described, the add port **560-2** is intrinsically paired with the drop port **540-2;** likewise, the add port **560-i** is paired with the drop port **540-i,** where **i** = 1 through N.)

By way of example, FIG. **5B** depicts an exemplary channel micromirror **580** (e.g., the channel micromirror **103-i** shown in FIG. **1B**) in a magnified schematic view. A first incident beam **581** represents the spectral channel λᵢ originating from the input port **520** in FIG. **5A****,** and a first reflected beam **582** represents the reflected spectral channel λᵢ from the channel micromirror **580.** A second incident beam **583** represents the add spectral channel λ**ⱼ** coming from the add port **560-2** in FIG. **5A****,** and a second reflected beam **584** represents the reflected add channel λ**_{¡}** from the channel micromirror **580.** Line **585** indicates the normal direction to the reflective surface of the channel micromirror **580.** Because the angle of incidence θ**₁** for the first incident beam **581** is equal to the angle of reflection θ₁' for the first reflected beam **582,** and the angle of incidence θ**₂** for the second incident beam **583** is likewise the same as the angle of reflection θ**₂**' for the second reflected beam **584,** the spatial arrangement by which the input, pass-through, drop, and add ports are positioned in FIG. **5A** enables the first reflected beam **582** to be routed into the drop port **540-2** and the second reflected beam **584** to be directed into the pass-through port **530.**

Moreover, by undergoing pivoting (or rotational) motion, e.g., about an axis **586** (e.g., along the ***x***-direction shown in FIG. **1B**) perpendicular to the plane of the paper, the channel micromirror **580** is further able to direct the spectral channel λ**ᵢ** into any other drop port in the input-output-port array **570,** along with routing an add spectral channel (with the same wavelength) from a pairing add port to the pass-through port **530,** as governed by the same operation principle illustrated in FIG **5B****.** The channel micromirror **580** may also direct the spectral channel λ**ᵢ** to the pass-through port **530,** as described in the embodiment of FIG.**1A**, **2A****,** **2B**, or **3****.**

One skilled in the art will appreciate that the exemplary embodiment of FIG. **5B** and the operation principle thus illustrated are applicable to any channel micromirror in the OADM **500A.** As such, the OADM **500A** is capable of inserting (or "adding") add spectral channels from multiple add ports to the pass-through port **530,** while simultaneously routing the spectral channels from the input port **520** into the appropriate drop ports, thereby performing both add and drop functions in a dynamically reconfigurable way.

It should be noted that the exemplary embodiment of FIG. **5A** is provided, by way of example, to illustrate the general principles of the present invention. Various elements and features are shown for illustrative purpose only, and therefore not drawn to scale. For instance, the input, pass-through, drop and add ports in the input-output-port array **570** are generally not evenly spaced, although they may be approximately evenly spaced in a paraxial approximation. From the teachings of the present invention, those skilled in the art will also appreciate that there are many alternative ways of arranging the input ports and output ports in the input-output-port array **570** of FIG. **5A** that would achieve substantially the same functionality as described above. By way of example, the input port **520** and the pass-through port **530** may be placed near the middle of, at the bottom of, or at any other desired location along the input-output-port array, so long as the drop ports and add ports are accordingly arranged so that interposed between every two input ports is an output port, and vice versa. This enables each channel micromirror to perform a dual function of "dropping" a spectral channel from the input port to a drop port and "adding" an add spectral channel (with the same wavelength) from a pairing add port to the pass-through port, in a manner as depicted in FIG. **5B**. Furthermore, the input-output-port array **570** may be embodied by an array of fiber collimators, which may be conveniently mounted in a V-groove fabricated on a substrate made of silicon, plastic, or ceramic, as commonly practiced in the art.

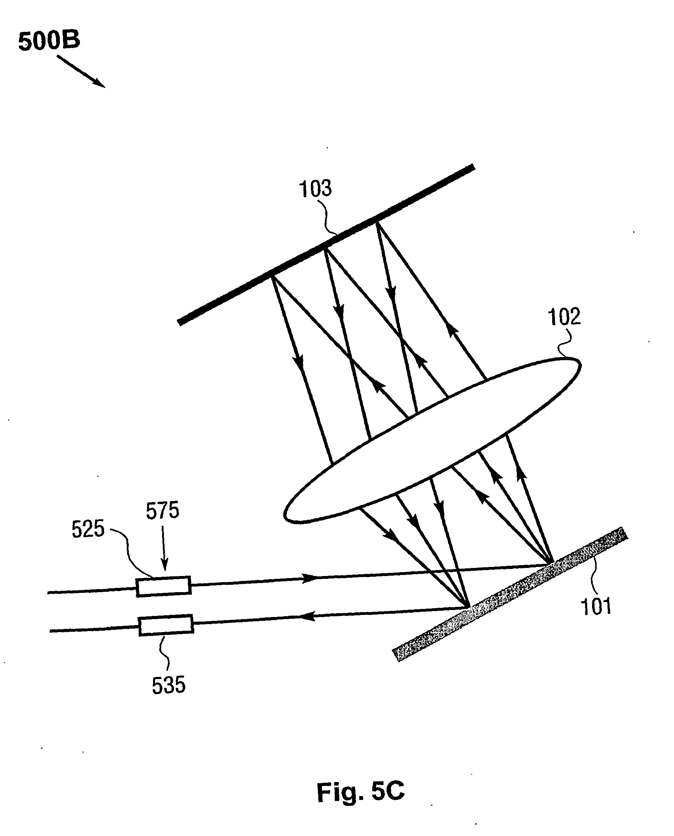

The underlying principle and operation of the embodiments of FIGS. **5A-5B** may be readily extended to devise an OADM equipped with a two-dimensional array of input and output ports, as illustrated in FIGS. **5C-5D****.** Shown in FIG. **5C** is a schematic top view of a second embodiment of an OADM according to the present invention. (The schematic views shown in FIG. **5C** and the following figures are presented with respect to the perspective view of FIG. **1A**.) By way of example, the OADM **500B** makes use of the general architecture of and hence a number of elements used in the embodiment of FIG. **1A**, as identified by those elements labeled with identical numerals. In addition, a two-dimensional input-output-port array **575** is implemented (where only a top view of the input-output-port array **575** is explicitly shown), in lieu of the fiber collimator array **110** in FIG. **1A**.

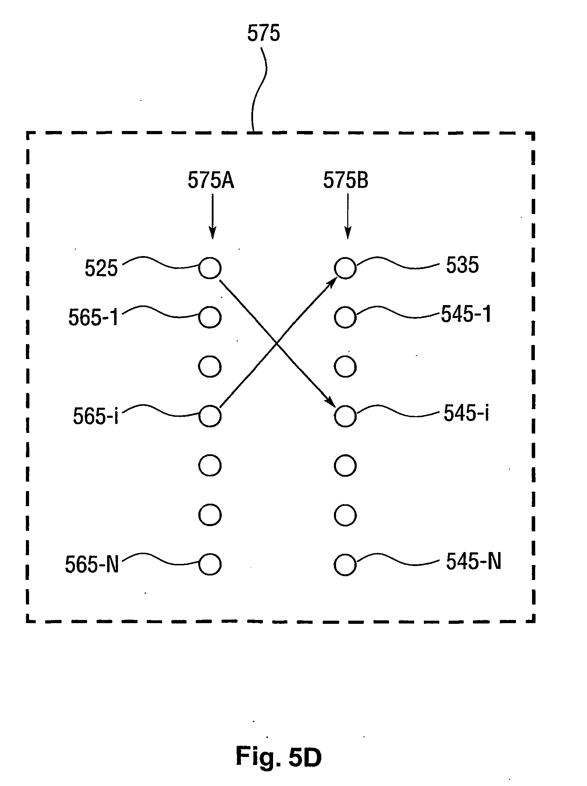

FIG. **5D** depicts a schematic front view of the input-output-port array **575** of FIG. **5C****.** By way of example, the input-output-port array **575** comprises an input-port column **575A** having an input port **525** and a plurality of add ports **565-1** through **565-N,** and an output-port column **575B** including a pass-through port **535** and a plurality of drop ports **545-1** through **545-N.** In this arrangement, each input port (e.g., add port **565-i**) forms a "pair" with its adjacent output port (e.g., drop port **545-i,** where **i** = 1 through N), in such a way to enable each channel micromirror to route a spectral-channel from the input port 525 to a drop port (e.g., the drop port **545-i**) and to direct an add spectral channel (with the same wavelength) from a pairing add port (e.g., the add port **565-i**) to the pass-through port **535,** as the arrows in the figure indicate.

Referring to both FIGS. **5C** and **5D****,** in operation, the input port **525** transmits a multi-wavelength optical signal. The wavelength-separator in the form of the diffraction grating **101** separates the multi-wavelength optical signal by wavelength into multiple "incoming spectral channels". (Note: the "incoming spectral channels" herein refer to the spectral channels originating from the input port **525,** in contrast with the add spectral channels to be described later). The beam-focuser in the form of the focusing lens **102** focuses the incoming spectral channels into corresponding focused spots, impinging onto the channel micromirrors **103.** As a way of example, each channel micromirror may be configured such that in a "nominal position", it reflects the corresponding incoming spectral channel to the pass-through port **535,** as illustrated in FIG. **5C****.** Furthermore, the diffraction grating **101,** along with the focusing lens **102,** may direct add spectral channels emerging from the add ports in the input-output-port array **575** onto corresponding ones of the channel micromirrors **103.** By pivoting each channel micromirror about an appropriate axis (e.g., along the x-direction shown in FIG. **1B**), the channel micromirror is further able to direct the incoming spectral channel into a drop port (e.g., the drop port **545-i**) in the input-output-port array **575** and an impinging add spectral channel from a pairing add port (e.g., the add port **565-i**) into the pass-through port **535,** as illustrated in FIG. **5D****.** One skilled in the art will recognize that the input-output-port array **575** may be alternatively implemented in any other WSR apparatus according to the present invention (e.g., by appropriately modifying the embodiment of FIG. **2A****,** **2B**, or **3**). Those skilled in the art will also appreciate that the exemplary embodiment of FIGS. **5C-5D** is provided, by way of example, to illustrate the general principles of the present invention. Various elements and features are shown for illustrative purpose only, and therefore not drawn to scale. For instance, the input port **525** and the pass-through port **535** as a pair may be alternatively placed near the middle of, at the bottom of, or at any other desired location along the input-output-port array **575,** so long as the input ports and the output ports are separately grouped in two columns and paired accordingly. The input-output-port array **575** may also be embodied by two columns of fiber collimators, wherein the input-port and output-port columns may be mounted in two V-grooves on a substrate, for example. From the teachings of the present invention, a skilled artisan will know how to implement various input and output ports in an OADM according to the present invention, to best suit a given application.

Furthermore, a two-dimensional array of collimator-alignment mirrors (along with first and second arrays of imaging lenses) may be additionally implemented between the input-output-port array **575** and the diffraction grating **101** in the embodiment of FIG. **5C** (e.g., in a manner as illustrated in FIG. **3**), such that each collimator-alignment mirror corresponds to either an input port or an output port. The collimator-alignment mirror array may be used for controlling the alignment of the multi-wavelength optical signal from the input port and the add spectral channels from the add ports, as well as for directing the reflected spectral channels into the output ports.

As such, a notable advantage of the aforementioned OADMs is the ability to perform both add and drop functions in a dynamically reconfigurable fashion, without involving additional components such as optical circulators and/or optical combiners.

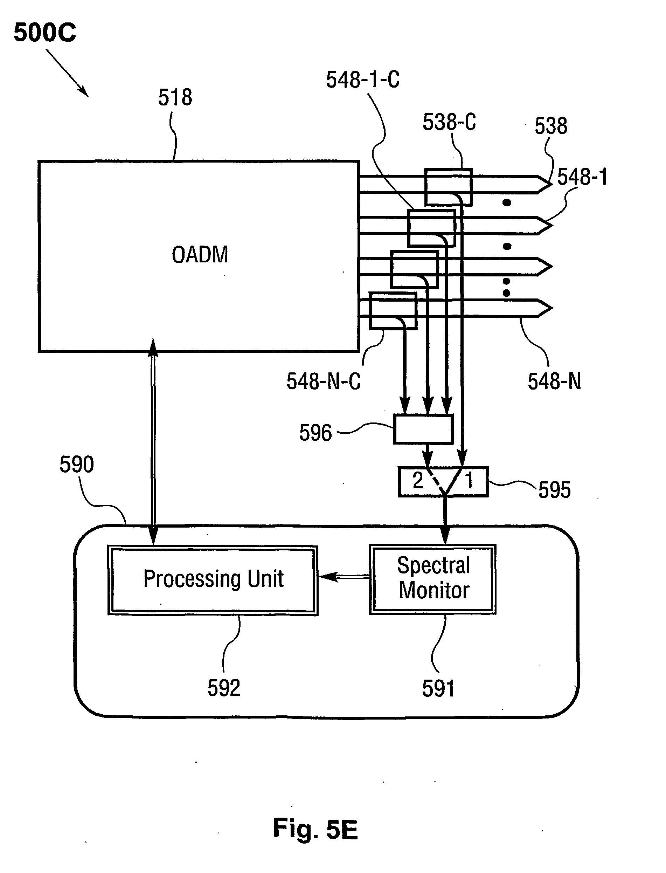

A servo-control assembly is incorporated in an OADM of the present invention, for monitoring and controlling the optical power levels of the spectral channels coupled into the output ports. By way of example, FIG. **5E** depicts an optical apparatus 500C including a servo-control assembly **590** integrated in an OADM **518,** according to the present invention. The OADM **518** may be substantially identical to the embodiment of FIG. **5A****,** **5C****,** or any other embodiment according to the present invention. For purpose of simplicity and clarity, only the output ports of the OADM **518** are explicitly shown, including a pass-through port **538** and a plurality of drop ports **548-1** through **548-N.** (For example, these output ports may be the pass-through port **530** and the drop ports **540-1** through **540-N** of FIG. **5A****,** or the constituents of the output-port column **575B** in FIG. **5D**). The servo-control assembly **590** includes a spectral power monitor **591** and a processing unit **592.** The spectral power monitor **591** may be optically coupled to the pass-through port **538,** so as to monitor the optical power levels of the spectral channels coupled into the pass-through port **538.** The coupling of the spectral power monitor **591** to the pass-through port **538** may be accomplished by way of a fiber-optic coupler **538-C** via an optical switch **595,** for instance. The processing unit **592,** in communication with the spectral power monitor **591** and the channel micromirrors (not shown in FIG. **5E****)** in the OADM **518,** uses the optical power measurements from the spectral power monitor **591** to provide feedback control of the channel micromirrors on an individual basis, so as to maintain the optical power levels of the spectral channels coupled into the pass-through port **538** at desired values. For example, the optical power levels of the spectral channels in the pass-through port **538** may be equalized at a predetermined value, as might be desired in an optical networking application. (Note: if the OADM **518** also includes the collimator-alignment mirrors as depicted in FIG. **2A****,** **2B****,** or **3****,** the processing unit **592** may additionally provide control of the collimator-alignment mirrors, in a manner as illustrated in FIG. **4B****.**)

In the embodiment of FIG. **5E****,** the spectral power monitor **591** may additionally measure the optical power levels of the spectral channels in the drop ports **548-1** through **548-N,** if so desired in a practical application. This may be accomplished by using fiber-optic couplers **548-1-C** through **548-N-C** to "tap off" predetermined fractions of the optical signals in the drop ports **548-1** through **548-N,** respectively. The tapped-off optical signals may be combined by an optical combiner **596,** whose output may in turn be coupled to the optical switch **595.** The configuration may be such that during normal operation, the optical switch **595** is set in a first switching state (**1**) that allows the optical signal diverted from the pass-through port **538** to pass into the spectral power monitor **591** (while blocking off the combined optical signal diverted from the drop ports), thereby enabling the optical power levels of the spectral channels in the pass-through port **538** to be monitored and further controlled (e.g., equalized). On an occasional or regular basis, the optical switch **595** may be set in a second switching state (**2**) that allows the combined optical signal tapped off from the drop ports to pass into the spectral power monitor **591** (while blocking off the optical signal diverted from the pass-through port **538**), thereby allowing the optical power levels of the drop spectral channels to be measured. Note that the processing unit **592** need not provide feedback control of the channels micromirrors in the OADM **518,** while the optical power levels of the drop spectral channels are being measured.

One skilled in the art will recognize that rather than operating the spectral power monitor **591** in a time-division-multiplexed fashion by way of the optical switch **595,** an auxiliary spectral power monitor may be additionally employed in the embodiment of FIG. **5E****,** dedicated for monitoring the optical power levels of the spectral channels in the drop ports. (The optical switch **595** need not be utilized, in this case.) In either scenario, the processing unit, the spectral power monitor(s) and the fiber-optic couplers of FIG. **5E** may be substantially similar to those described in the embodiment of FIG. **4A** (or **4B**) in configuration and operation. The optical combiner **596** may be an Nx 1 fiber-optic coupler, or any other suitable optical combining means known in the art. The optical switch **595** may be a 2×1 switch. Those skilled in the art will further appreciate that in lieu of the combination of the optical combiner **596** and the optical switch **595,** an (N+1)×1 optical switch may be alternatively implemented in FIG. **5E****,** where the (N+1) input ends of the switch may be coupled to the pass-through port **538** and the drop ports **548-1** through **548-N,** respectively, and the output end of the switch may be coupled to the spectral power monitor **591.**

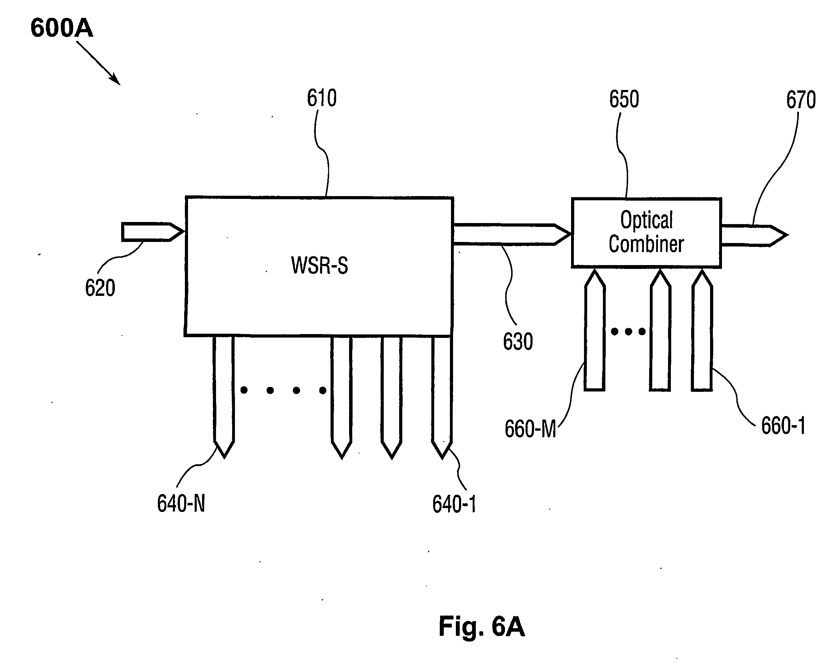

FIG. **6A** depicts a third embodiment of an OADM according to the invention. By way of example, OADM **600A** comprises a WSR-S (or WSR) apparatus **610** and an optical combiner **650.** An input port **620** of the WSR-S apparatus **610** receives a multi-wavelength optical signal. The constituent spectral channels of this optical signal are subsequently separated and routed into a plurality of output ports, including a pass-through port **630** and one or more drop ports **640-1** through **640-N** (N ≥ 1). The pass-through port **630** may receive any number of the spectral channels, i.e., the pass-through spectral channels. Each drop port may also receive any number of the spectral channels, i.e., the drop spectral channels. The pass-through port **630** is optically coupled to the optical combiner **650,** which serves to combine the pass-through spectral channels with one or more add spectral channels provided by one or more add ports **660-1** through **660-M** (M ≥ 1). The combined optical signal is then routed into an existing port **670,** providing an output multi-wavelength optical signal.

In the above embodiment, the optical combiner **650** may be a K×1 (K ≥ 2) broadband fiber-optic coupler, wherein there are K input-ends and one output-end. The pass-through spectral channels and the add spectral channels are fed into the K input-ends, e.g., in a one-to-one correspondence, and the combined optical signal exits from the output-end of the K×1 fiber-optic coupler as the output multi-wavelength optical signal of the system. Such a multiple-input coupler also serves the purpose of multiplexing a multiplicity of add spectral channels to be coupled into the OADM **600A.** If the optical power levels of the spectral channels in the output multi-wavelength optical signal are desired to be actively managed, such as being equalized at a predetermined value, two spectral power monitors may be utilized. As a way of example, the first spectral power monitor may receive optical signals tapped off from the pass-through port **630** and the drop ports **640-1** through **640-N,** e.g., by way of fiber-optic couplers as depicted in FIG. **4A** or **4B**. The second spectral power monitor receives optical signals tapped off from the exiting port **670.** A servo-control system may be constructed accordingly for monitoring and controlling the pass-through, drop and add spectral channels. As such, the embodiment of FIG. **6A** provides a versatile optical add-drop multiplexer in a simple and low-cost assembly, while providing multiple drop/add ports in a dynamically reconfigurable fashion.

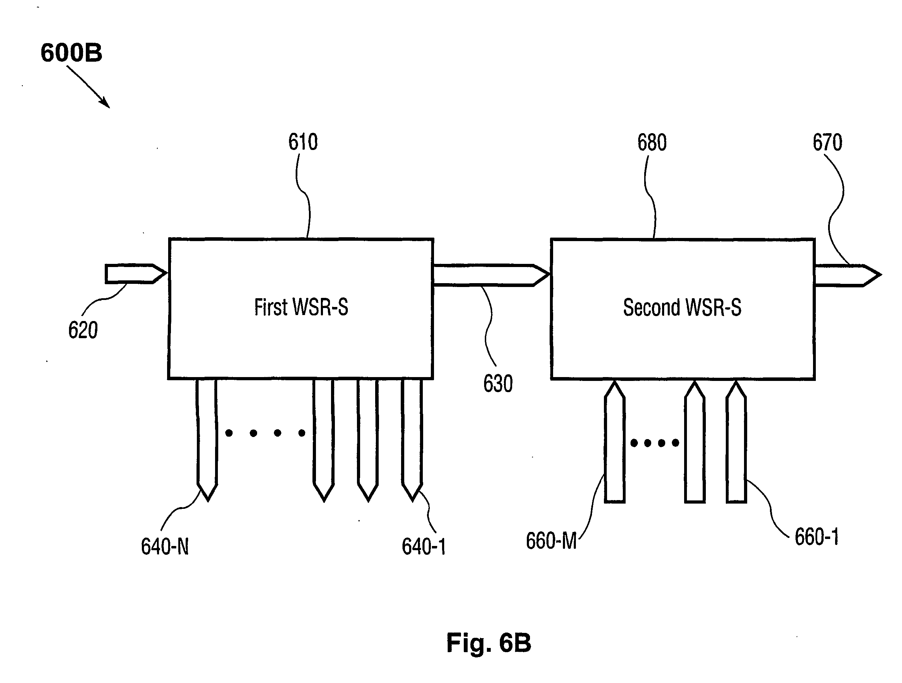

FIG. **6B** depicts a fourth embodiment of an OADM according to the invention. By way of example, OADM **600B** comprises a first WSR-S apparatus **610** optically coupled to a second WSR-S apparatus **680.** Each WSR-S apparatus may be substantially identical to the embodiment of FIG. **4A** or **4B**. (A WSR apparatus of the embodiment of FIG. **1A**, **2A****,** **2B**, or **3** may be alternatively implemented.) The first WSR-S apparatus **610** includes an input port **620,** a pass-through port **630,** and one or more drop ports **640-1** through **640-N** (N ≥ 1). The pass-through spectral channels from the pass-through port **630** are further coupled to the second WSR-S apparatus **680,** along with one or more add spectral channels emerging from add ports **660-1** through **660-M** (M ≥ 1). In this exemplary case, the pass-through port **630** and the add ports **660-1** through **660-M** constitute the input ports for the second WSR-S apparatus **680.** By way of its constituent wavelength-separator (e.g., a diffraction grating) and channel micromirrors (both not shown in FIG. **6B**), the second WSR-S apparatus **680** serves to multiplex the pass-through spectral channels and the add spectral channels, and route the multiplexed optical signal into an exiting port **670** to provide an output signal of the system.

In the embodiment of FIG. **6B**, one WSR-S apparatus, e.g., the first WSR-S apparatus **610,** effectively performs a dynamic drop function, whereas the other WSR-S apparatus (e.g., the second WSR-S apparatus **680**) carries out a dynamic add function. There are essentially no fundamental restrictions on the wavelengths that can be added or dropped (other than those imposed by the overall communication system). Moreover, the underlying OADM architecture thus presented is intrinsically scalable and can be readily extended to any number of cascaded WSR-S (or WSR) systems, if so desired for performing intricate add and drop functions. Additionally, the OADM of FIG. **6B** may be operated in reverse direction, by using the input ports as the output ports, and the drop ports as the add ports.

As discussed above, the diffraction efficiency of a diffraction grating is polarization-sensitive, and such polarization-sensitive effects may give rise to significant insertion loss and polarization-dependent loss (PDL) in an optical system. The situation is exacerbated in WDM optical networking applications, where the polarization state of a WDM signal is typically indeterminate and may vary with time. This can produce an undesirable time-varying insertion loss that may cause the optical signals to fall below acceptable power levels, or render them unusable. Thus, it is desirable to avoid such polarization-sensitive effects. The present invention affords a polarization diversity scheme that addresses this issue, as will now be described.

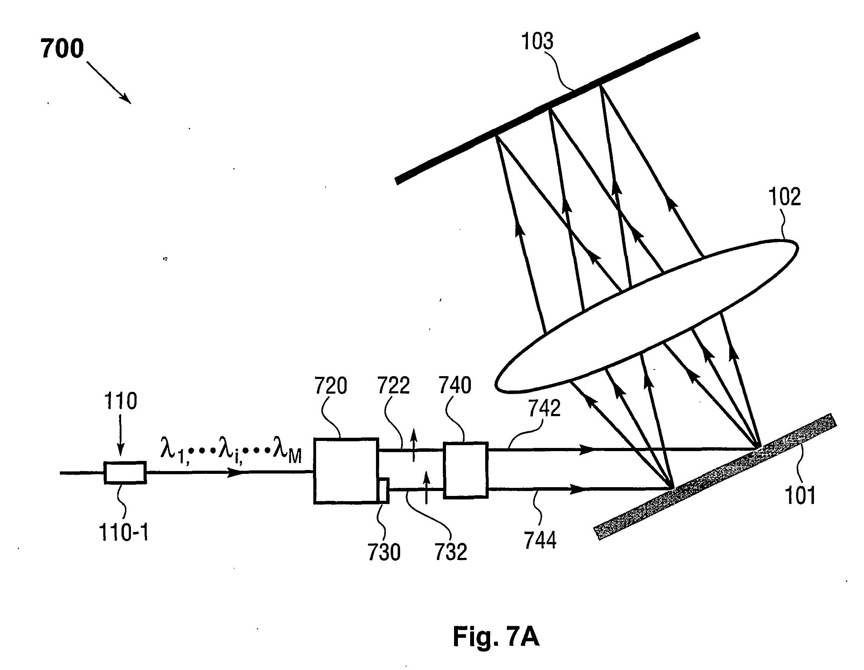

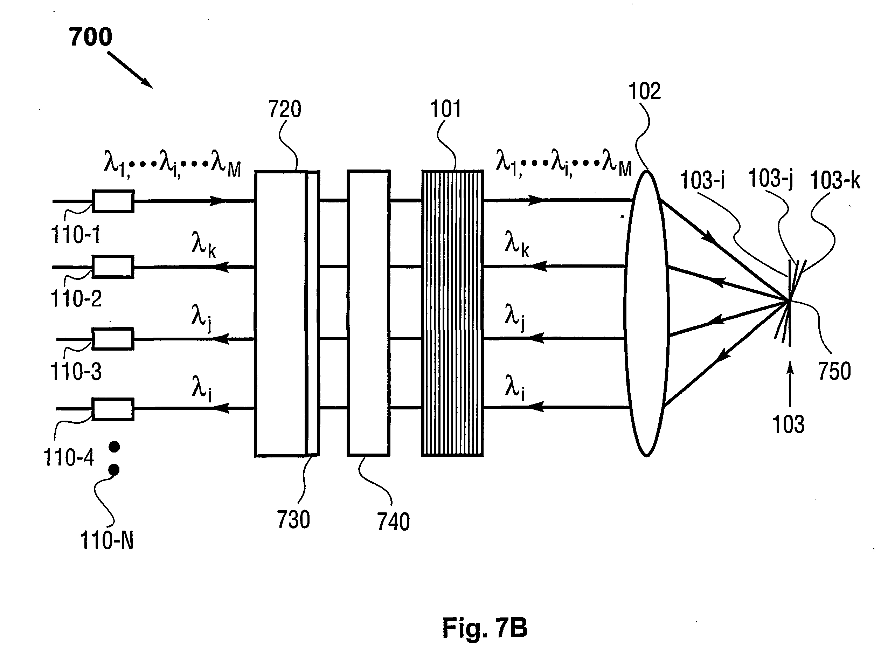

FIG. **7A** depicts a schematic top view and FIG. **7B** depicts a schematic side view of a fifth embodiment of a WSR apparatus of the present invention, employing a polarization diversity arrangement that minimizes polarization-sensitive effects. WSR apparatus **700** may make use of the general architecture and a number of the elements used in the embodiment of FIG. **1A****,** as indicated by those elements labeled with the same numerals. The input port **110-1** provides a multi-wavelength optical signal (which may contain wavelengths λ**₁** through λ**_{M}**, for instance) to a polarization-displacing unit **720.** The multi-wavelength optical signal may be of indeterminate and/or time-varying polarization. The polarization-displacing unit **720** may be disposed along the optical path between the array of fiber collimators **110** (including the input port **110-1** and the output ports **110-2** through **110-N,** as shown in FIG. **7B** below) and the diffraction grating **101.** The polarization-displacing unit **720** serves to separate (or decompose) the input multi-wavelength optical signal into a first p-polarization component and a second s-polarization component that is orthogonal to the p-polarization component. Assuming that p-polarization is the "preferred" polarization direction of the diffraction grating **101** (i.e., the diffraction efficiency is higher for the p-polarization component than for the s-polarization component), the p-polarization component of the input optical signal may be output as a first optical signal **722** from the polarization displacing unit **720.** The s-polarization component of the input optical signal may undergo a 90-degree rotation in polarization by a polarization-rotating unit **730** to produce a second optical signal **732** also having p-polarization. Thus, the two optical signals **722, 732** incident onto the diffraction grating **101** both possess p-polarization.

The first and second polarization components (optical signals **722, 732**) emerging respectively from the polarization-displacing unit **720** and the polarization-rotating unit **730** may further undergo an anamorphic beam magnification by a beam-modifying unit **740,** and thereafter emerge as spatially separated and magnified beams **742, 744** which impinge upon the diffraction grating **101**. The configuration may be such that the beam-modifying unit **740** preferentially enlarges the beam size in the direction perpendicular to the groove lines on the diffraction grating **101,** whereby the focused beams produced by the focusing lens **102** are narrower in this direction (i.e., perpendicular to the groove lines). This enables rectangular shaped micromirrors to be implemented, for instance. The diffraction grating **101** subsequently separates the magnified first and second polarization components **742, 744** by wavelength respectively into first and second sets of diffracted optical beams. Each set of optical beams may contain multiple wavelengths λ**₁** through λ**_{M}**, diffracted from the diffraction grating at different angles. The focusing lens **102** in turn focuses the diffracted optical beams into corresponding focused spots, impinging onto the channel micromirrors **103.** Each focused spot may be elliptical in cross-section. Further, the first and second diffracted optical beams having the same wavelength (e.g., λ**ᵢ**) are arranged to impinge onto the same channel micromirror (e.g., the channel micromirror **103-i** shown in FIG. **7B** below). In this way, each channel micromirror concurrently handles two optical beams characterized by the same wavelength (and polarization).

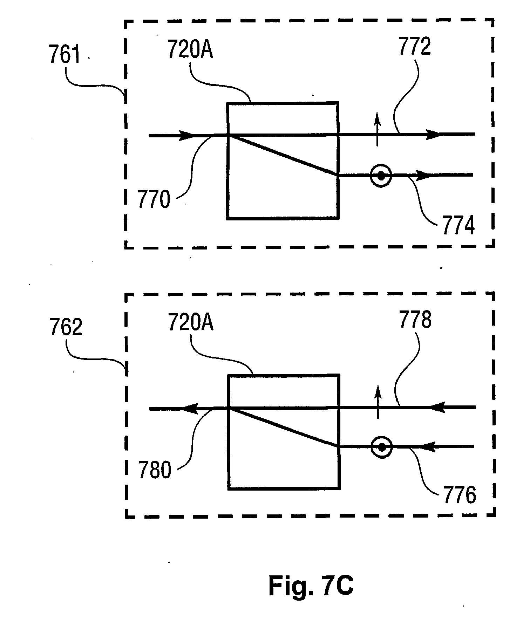

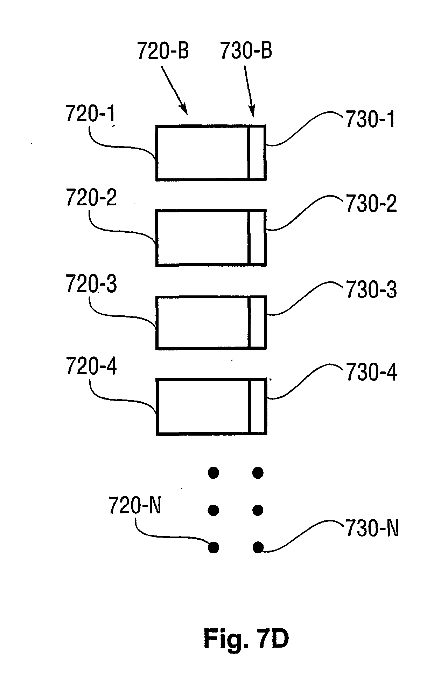

FIG. 7**B** depicts a schematic side view of the WSR apparatus **700,** where only the second polarization component (represented by optical signals **732, 744** in FIG. **7A**) on the forward path), along with the reflected first set of optical beams on the return path, are explicitly shown. For purposes of illustration and clarity, several channel micromirrors are explicitly identified in this figure, while the array of channel micromirrors as a whole is also indicated by the numeral **103.** As described above with respect to FIGS. **1A-1B**, the channel micromirrors **103** are individually controllable and movable, e.g., pivotable about an axis **750** (which may be parallel to the ***x***-axis shown in FIG. **1B** and perpendicular to the plane of FIG. **7B**). Hence, each channel micromirror is capable of directing its corresponding optical beams into any one of the output ports **110-2** through **110-N** by way of its pivoting motion. By way of example, the channel micromirror **103-k** may be controlled to direct the first and second optical beams with wavelength λ**ₖ** into the first output port **110-2;** the channel micromirror **103-j** may be controlled to direct the first and second optical beams with wavelength λ**ⱼ** into the second output port **110-3;** the channel micromirror 103-i may be controlled to direct the first and second optical beams with wavelength λ**ᵢ** into the third output port **110-4,** and so on. Note that a plurality of the channel micromirrors may be individually controlled to direct their corresponding optical beams into the same output port.

Referring to FIG. **7A****,** the first and second sets of optical beams reflected from the respective channel micromirrors **103** are deflected out of the plane of the figure (as indicated by the side view of FIG. **7B**), hence not explicitly shown in the top view of FIG. **7A****.** With reference to FIG. **7B**, it will be apparent to those skilled in the art that the reflected first and second sets of optical beams each undergo an anamorphic beam demagnification by way of the beam-modifying unit **740,** thereby resuming the beam size of the input optical signal. The reflected first set of optical beams subsequently undergoes a 90-degree rotation in polarization by the polarization-rotating unit **730,** whereby the reflected first and second sets of optical beams are polarized in two orthogonal directions upon entering the polarization-displacing unit **720.** This enables the polarization-displacing unit **720** to recombine the reflected first and second sets of optical beams by wavelength respectively into reflected spectral channels, prior to being coupled into selected ones of the output ports **110-2** through **110-N.**

It should be appreciated that the rotation in polarization produced by a polarization-rotating element (e.g., the polarization-rotating unit **730**) may have slight variations about a prescribed angle (e.g., 90-degrees), due to imperfections that may exist in a practical system. Such variations, however, will not significantly affect the overall performance of the invention.

In the embodiment of FIGS. **7A-7B****,** the polarization-displacing unit **720** may be in the form of a single polarization-displacing element, corresponding to the array of fiber collimators **110.** FIG. **7C** shows two schematic views of an exemplary embodiment of a polarization-displacing element **720A** which may be a birefringent beam displacer well known in the art. The first schematic represented by dashed box **761** of FIG. **7C** illustrates a top view of the polarization-displacing element **720A,** where an incident optical beam **770** (e.g., the multi-wavelength input optical signal in the embodiment of FIGS. **7A-7B**) is decomposed into first and second polarization components **772, 774** polarized in two orthogonal directions, as illustrated in the figure. Notice that the two polarization components are spatially displaced and propagate in parallel, upon emerging from the polarization-displacing element **720A.** The second schematic represented by dashed box **762** of FIG. **7C** depicts an exemplary cross-sectional top view of the polarization-displacing element **720A,** where two parallel optical beams **776, 778** polarized in two orthogonal directions (e.g., the first and second reflected optical beams associated with wavelength λ**ᵢ** in the embodiment of FIGS. **7A-7B**) are recombined by way of traversing the polarization-displacing element **720A** into a single optical beam **780** (e.g., the reflected spectral channel with wavelength λ**ᵢ** in the embodiment of FIGS. **7A-7B**). As such, the polarization-displacing element **720A** acts as a polarization-separating element for optical beams propagating in one direction; and serves as a polarization-combining element for optical beams traversing in the opposite direction.

Those skilled in the art will appreciate that rather than using a birefringent beam displacer, the polarization-displacing element **720A** may alternatively be provided by a suitable polarizing-beam-splitting element, e.g., a polarizing beam splitter commonly used in the art in conjunction with an appropriate beam-deflector or prism (such that the two emerging polarization components propagate in parallel). Such a polarizing-beam-splitting element provides a substantially similar function to the aforementioned birefringent beam displacer. In general, a polarization-displacing element in the present invention may be embodied by any optical element that provides a dual function of polarization separating and combining, e.g., in a manner as depicted in FIG. **7C****.**

Likewise, the polarization-rotating unit **730** may comprise a single polarization-rotating element, e.g., a half-wave plate, a liquid crystal rotator, a Faraday rotator, or any other means known in the art that is capable of rotating the polarization of an optical beam by a prescribed angle (e.g., 90 degrees).

Alternatively, the polarization-displacing unit **720** may comprise a plurality of polarization-displacing elements, each corresponding to one or more fiber collimators **110** in the embodiment of FIGS. **7A-7B****.** By way of example, FIG. **7D** depicts a schematic side view of a polarization-displacing unit **720B** which may comprise an array of polarization-displacing elements **720-1** through **720-N.** Each polarization-displacing element may be a birefringent beam displacer, a polarizing-beam-splitting element, or any other suitable means known in the art, as described above with respect to FIG. **7C****.** In this case, the polarization-rotating unit **730** may include one or more polarization-rotating elements, each as described above. As a way of example, FIG. **7D** also shows a schematic side view of a polarization-rotating unit **730B** as an array of polarization-rotating elements **730-1** through **730-N,** which may be in a one-to-one correspondence with the polarization-displacing elements **720-1** through **720-N.** As such, the polarization-displacing unit **720B,** along with the polarization-rotating unit **730B,** may be implemented in the embodiment of FIGS. **7A-7B** so that the polarization-displacing elements **720-1** through **720-N** are in a one-to-one correspondence with the fiber collimators **110** that provide the input port **110-1** and the output ports **110-2** through **110-N.**

Those skilled in the art will appreciate that the exemplary embodiments of FIGS. **7C-7D** are provided as an example to illustrate how a polarization-displacing unit, along with a polarization-rotating unit, may be configured and operated in the present invention. Various changes and modifications may be made herein to perform the designated functions in a substantially equivalent manner. For example, the polarization-displacing unit **720** along with the polarization-rotating unit **730** may alternatively be configured such that the first and second polarization components are spatially separated along a vertical direction that is substantially perpendicular to the plane of the paper in the schematic top view of FIG. **7A****,** as opposed to being separated horizontally in a manner as illustrated in **FIG. 7A****.** As will be appreciated from the teachings of the invention, one skilled in the art would know how to implement an appropriate polarization-displacing unit, along with a suitable polarization-rotating unit, in a WSR apparatus according to the present invention, for a given application.

Moreover, the beam-modifying unit **740** may comprise an assembly of cylindrical lenses or prisms, in optical communication with the polarization-displacing unit **720** along with the polarization-rotating unit **730** and the diffraction grating **101.** In general, a beam-modifying unit may be embodied by any optical means that is capable of magnifying the input optical signal and de-magnifying the reflected optical beams according to a predetermined ratio. Such a beam-modifying unit may be particularly useful in applications that call for a refined spectral resolution, such as DWDM optical networking applications.

The WSR apparatus **700** of FIGS. **7A-7B** is substantially similar to the WSR apparatus **100** of FIG. **1A** in operation and function and hence achieves the advantages thereof. Furthermore, the aforementioned polarization diversity arrangement renders the polarization sensitivity of the diffraction grating **101** inconsequential in the WSR apparatus **700.** This enables the WSR apparatus **700** to minimize the insertion loss. It also allows the WSR apparatus **700** to enhance the spectral resolution in a simple and cost-effective construction (e.g., by making use of high-dispersion holographic diffraction gratings commonly available in the art). Another notable feature of the polarization diversity arrangement is that the first and second optical beams associated with each wavelength (corresponding to the two polarization components of each spectral channel) effectively "exchange" their respective optical paths, upon reflection from the micromirror (e.g., the return path of the second optical beam is substantially similar to the forward path of the first optical beam, and vice versa). This has the important consequence of substantially equalizing the overall optical paths of the two polarization components for each spectral channel, thereby minimizing polarization-dependent loss (PDL) and polarization-mode dispersion (PMD). Such attributes are highly desirable in many applications.

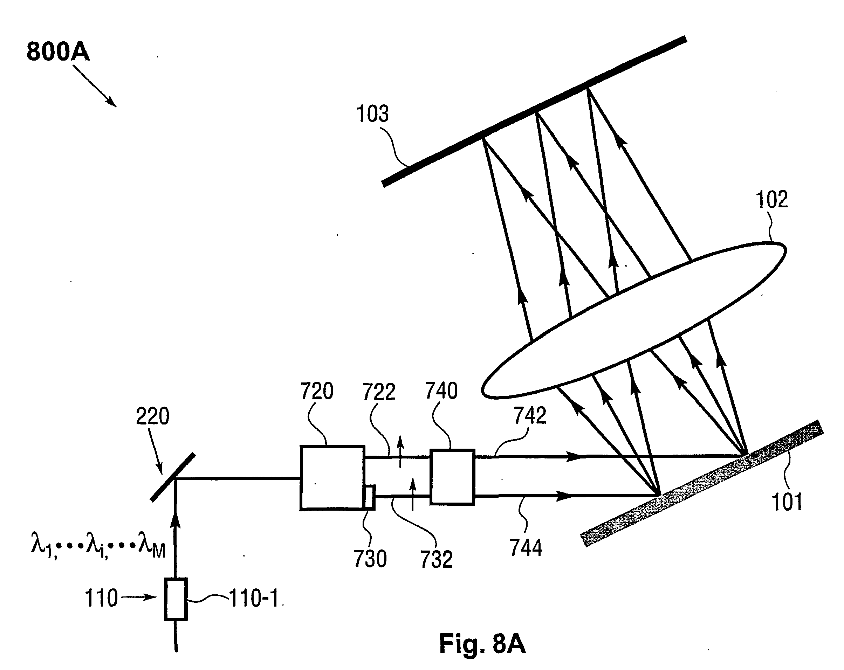

Those skilled in the art will appreciate that the WSR apparatus **700** of FIGS. **7A-7B** may be further modified in various ways according to the teachings of the present invention. For example, the WSR apparatus may include an array of collimator-alignment mirrors, e.g., in a manner as described with respect to the embodiment of FIG. **2A****,** **2B**, or **3** above. FIG. **8A** shows a schematic top view of a sixth embodiment of a WSR apparatus **800A** of the present invention, which employs an array of collimator-alignment mirrors **220** in a polarization diversity arrangement. By way of example, the WSR apparatus **800A** may be built upon the embodiments of FIGS. **2A** and **7A****,** hence similar elements are labeled with the same numerals. In FIG. **8A****,** the array of collimator-alignment mirrors **220** (which may include the collimator-alignment mirrors **220-1** through **220-N,** as shown in FIG. **2A****)** may be disposed along the optical path between the fiber collimators **110** and the polarization-displacing unit **720,** such that there is a one-to-one correspondence between the collimator-alignment mirrors **220** and the fiber collimators **110** providing the input and output ports. As described with respect to FIG. **2A****,** the collimator-alignment mirrors **220** may be controlled to adjust the alignment of the multi-wavelength input optical signal and to further provide angular control of the collimated beams of the reflected spectral channels. This facilitates the coupling of the reflected spectral channels into the respective output ports according to desired coupling efficiencies.

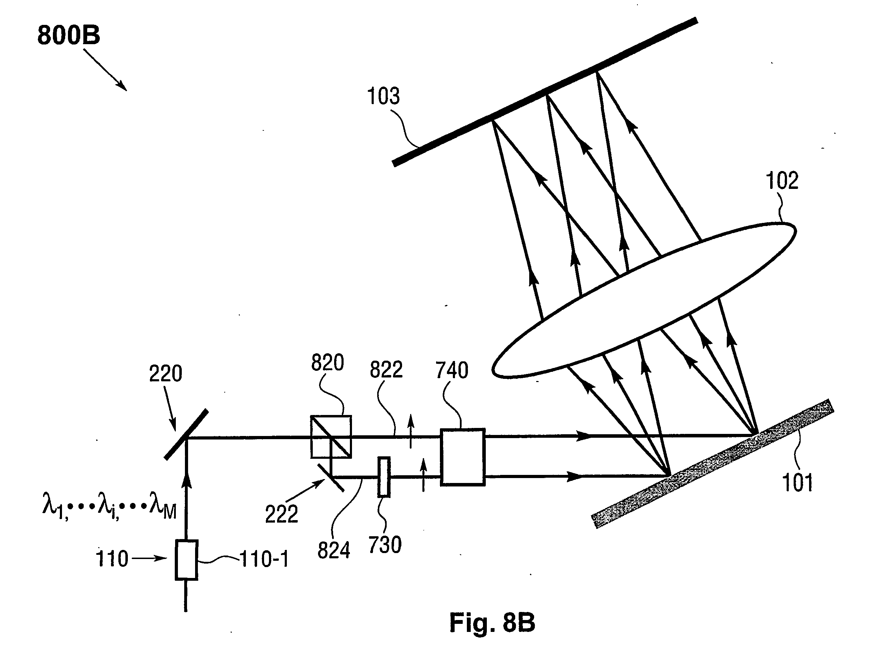

In the embodiment of FIG. **8A****,** the collimator-alignment mirrors **220** are disposed between the fiber collimators **110** and the polarization-displacing unit **720,** and control the angular position of the (un-split) multi-wavelength input optical signal as well as the (combined) reflected spectral channels. There may be applications where it is desired to provide separate control to the first and second polarization components (on the forward path), as well as to the reflected first and second sets of optical beams (on the return path). FIG. **8B** depicts a schematic top view of a seventh embodiment of a WSR apparatus **800B** of the present invention, pertaining to this situation. The WSR apparatus **800B** may be built upon the embodiment of FIG. **8A****,** hence similar elements are labeled with the same numerals. In this case, a polarizing-beam-splitting unit **820** may be employed (in lieu of the polarization-displacing unit **720** of FIG. **8A**), to decompose the multi-wavelength input optical signal into first and second polarization components **822, 824** that are propagating in two orthogonal directions. The second polarization component **824** may be subsequently incident onto and reflected by a first beam-deflecting unit **222,** whereby it propagates parallel to the first polarization component **822.** The ensuing operation thereafter is substantially similar to that of FIG. **8A****.** On the return path, the reflected first set of optical beams is incident onto and reflected by the first beam-deflecting unit **222,** so as to enable the polarizing-beam-splitting unit **820** to recombine the reflected first and second sets of optical beams by wavelength respectively into reflected spectral channels.

In the embodiment of FIG. **8B**, the polarizing-beam-splitting unit **820** may be a single polarizing beam splitter known in the art, in optical communication with the array of fiber collimators **110** via the collimator-alignment mirrors **220.** It may also comprise an array of polarizing beam splitters, e.g., in a one-to-one correspondence with the collimator-alignment mirrors **220.** The first beam-deflecting unit **222** may comprise an array of first mirrors, e.g., in a one-to-one correspondence with the collimator-alignment mirrors **220.** The first mirrors **222** may be individually adjustable, so as to control the relative alignment and thereby ensure the requisite beam parallelism between the first and second polarization components on the forward path, which in turn causes the first and second diffracted optical beams associated with each wavelength to substantially coincide on the same channel micromirror. On the return path, the first mirrors **222** may likewise adjust the relative alignment between the reflected first and second sets of optical beams respectively, thereby ensuring that the reflected first and second sets of optical beams are properly recombined into the respective spectral channels by way of the polarizing-beam-splitting unit **820.** The first mirrors **222** may be controlled on a dynamic basis. Alternatively, the first mirrors **222** may be adjusted to predetermined positions to enable the polarizing-beam-splitting unit **820** to achieve the requisite beam parallelism. The first mirrors **222** may be subsequently fixed in respective positions over the course of operation. (In this way, the tolerances required for the polarizing-beam-splitting unit **820** may be relaxed.) It should be further appreciated that the first beam-deflecting unit **222** may also be a static mirror, or any other beam-deflecting means known in the art, configured such that the combination of the polarizing-beam-splitting unit **820** and the first beam-deflecting unit **222** effectively constitutes a polarization-displacing unit as described above.

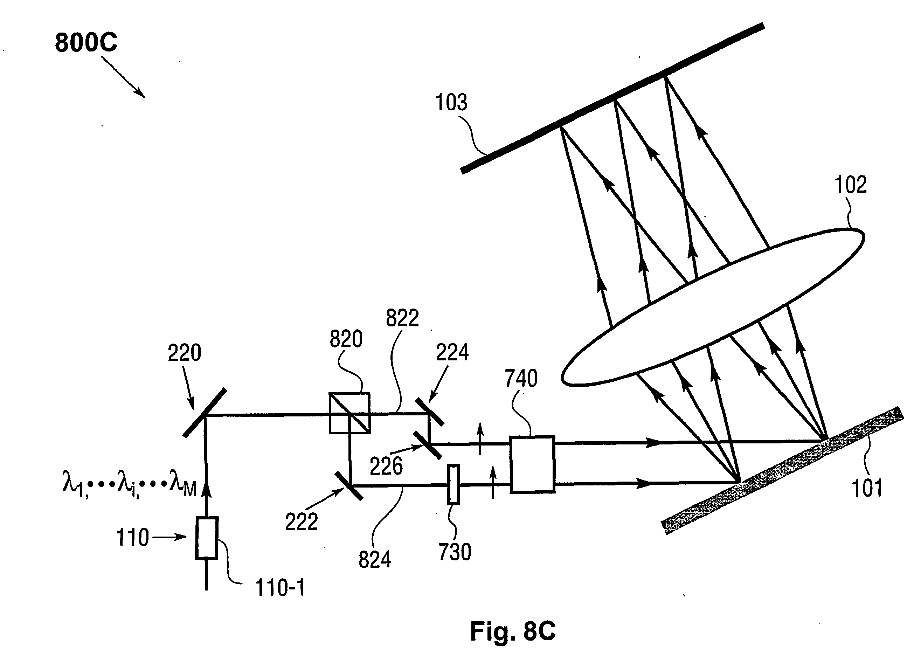

FIG. **8C** depicts a schematic top view of an eighth embodiment of a WSR apparatus **800C** of the present invention. The WSR apparatus **800C** may include the elements employed in the embodiment of FIG. **8B****,** along with second and third beam-deflecting units **224, 226.** The second beam-deflecting unit **224** may comprise an array of second mirrors that are individually adjustable, e.g., in a one-to-one correspondence with the constituent mirrors in the first beam-deflecting unit **222.** The third beam-deflecting unit **226** may simply be a static mirror, or other known beam-deflecting device. In this way, the first and second polarization components **822, 824** (on the forward path) may be independently controlled by the first and second beam-deflecting units **222, 224,** which may also control the reflected first and second sets of optical beams (on the return path), respectively. The collimator-alignment mirrors **220** may further facilitate the coupling of the (combined) reflected spectral channels into the desired output ports.

The WSR apparatus **700** (or any one of the embodiments of FIGS. **8A-8C**) of the present invention may further incorporate a servo-control assembly, e.g., in a manner as described with respect to FIG. **4A** (or **4B**) above. The servo-control assembly may dynamically manage the optical power levels of the reflected spectral channels coupled into the output ports. The servo-control assembly may also be configured such to minimize PDL associated with the spectral channels.

Furthermore, a dynamically reconfigurable OADM may be built upon the WSR apparatus **700, 800A, 800B** or **800C** (along with an associated servo-control assembly), e.g., in a manner similar to that described above. The thus-constructed OADMs will have important advantages of low insertion loss, low PDL, and enhanced spectral resolution, which would be particularly suitable for WDM optical networking applications.

Those skilled in the art will recognize that the aforementioned embodiments are provided by way of example to illustrate the general principles of the invention. Various changes, substitutions, and alternations can be made without departing from the principles and the scope of the invention as defined in the appended claims.

## Claims

1. An optical wavelength-separating-routing apparatus comprising:
a) multiple fiber collimators (110) providing an input port (110-1) for a multi-wavelength optical signal and a plurality of output ports (110-2 to 110-N);
b) a wavelength-separator (101) that separates said multi-wavelength optical signal by wavelength into multiple spectral channels; and
c) a switch comprising multiple channel micromirrors (103) being individually and continuously pivotable to reflect said spectral channels via said wavelength-separator (101) into selected output ports (110-2 to 110-N); **characterised in that**
d) said switch comprises an array of channel micromirrors (103) positioned such that each channel micromirror (103-1 to 103-N) receives a unique one of said spectral channels;
e) a servo-control assembly (440), in communication with said channel micromirrors (430) and said output ports (420), for providing control of said channel micromirrors (430) and thereby maintaining a predetermined coupling of each reflected spectral channel into a unique one of said output ports(420), wherein said servo-control assembly (440) comprises a spectral power monitor (460) for monitoring optical power levels of said spectral channels coupled into said output ports, and a processing unit (470) responsive to said optical power levels for providing control of said channel micromirrors (430); and
f) a plurality of fiber-optic couplers (420-1-C to 420-N-C ) coupled to said output ports for tapping off predetermined portions of said spectral channels and providing those portions to said spectral power monitor for monitoring said power levels.

2. The optical apparatus of claim 1 further comprising an optical combiner (596) to receive said tapped off predetermined portions of said spectral channels from said fiber-optic couplers and combine said tapped off predetermined portions to produce a combined output; and an optical switch (595) adapted to receive said combined output and another separately tapped off predetermined portion of a spectral channel, and adapted to control passing of said combined output or said separately tapped off predetermined portion to the spectral power monitor (460).

3. The optical apparatus of claim 1 or 2 wherein said servo-control assembly (440) is adapted to maintain said optical power levels at a predetermined value.

4. The optical apparatus of any of the preceding claims wherein each channel micromirror (103) is pivotable about at least one axis.

5. The optical apparatus of any of the preceding claims further comprising a beam focuser (102) that focuses said spectral channels into corresponding focused spots.

6. The optical apparatus of claim 5 wherein said beam-focuser (102) comprises one or more focusing lenses.

7. The optical apparatus of any of the preceding claims wherein said wavelength-separator (101) comprises an element selected from the group consisting of ruled diffraction gratings, holographic diffraction gratings, echelle gratings, transmission gratings, curved diffraction gratings, and dispersing prisms.

8. The optical apparatus of any of the preceding claims further comprising a quarter-wave plate (104) optically interposed between said wavelength-separator (101) and said channel micromirrors (103).

9. The optical apparatus of any of the preceding claims wherein said output ports (110-2 to 110N) include a pass-through port and one or more drop ports, wherein said channel mirrors (103) direct a subset of said spectral channels into said pass-through port to provide for a pass-through signal, and wherein said optical apparatus further comprises an optical combiner (650) for combining said pass-through signal with one or more add spectral channels.

10. The optical apparatus of any of the preceding claims wherein said fiber collimators (110) are arranged in a one-dimensional input-output-port array (575), including said input port (525) for said multi-wavelength optical signal and a plurality of add ports (565-1 to 565-N), and multiple output ports providing a pass-through port (535) and a plurality of drop ports (545-1 to 545-N), wherein said input-output-port array is configured such that each drop port (545-1 to 545-N) has a pairing add port (565-1 to 565-N), whereby each channel micromirror (103) is able to reflect a spectral channel from said multi-wavelength optical signal into a drop port (545-1 to 545-N) and an add spectral channel from a pairing add port (565-1 to 565-N) into said pass-through port (535).

11. The optical apparatus of claim 13 wherein said input-output-port array (575) comprises alternating input and output ports.

## Patentansprüche

1. Optische Router-Vorrichtung mit Wellenlängen-Separierung, umfassend:
a) Multifaserkollimatoren (110), die einen Eingangsport (110-1) für ein optisches Multiwellenlängensignal und eine Vielzahl von Ausgangsports (110-2 bis 110-N) bereitstellen;
b) einen Wellenlängen-Separator (101), der das optische Multiwellenlängensignal nach Wellenlänge in Multispektralkanäle separiert; und
c) einen Schalter umfassend Multikanal-Mikrospiegel (103), die individuell und kontinuierlich schwenkbar sind, um die Spektralkanäle über den Wellenlängenseparator (101) in ausgewählte Ausgangsports (110-2 bis 110-N) hinein zu reflektieren; **dadurch gekennzeichnet, dass**
d) der Schalter ein Feld von Kanal-Mikrospiegeln (103) umfasst, das so angeordnet ist, dass jeder Kanal-Mikrospiegel (103-1 bis 103-N) einen singulären der Spektralkanäle empfängt;
e) eine Servosteueranordnung (440), die mit den Kanal-Mikrospiegeln (430) und den Ausgangsports (420) kommuniziert, um für die Steuerung der Kanal-Mikrospiegel (430) und **dadurch** für die Beibehaltung einer vorgegebenen Einkopplung jedes reflektierten Spektralkanals in einen singulären der Ausgangsports (420) zu sorgen, wobei die Servosteueranordnung (440) einen Spektralleistungs-Monitor (460) für die Überwachung der optischen Leistungspegel der in die Ausgangsports eingekoppelten Spektralkanäle umfasst, und eine von den optischen Leistungspegeln abhängige Prozessoreinheit (470), die für die Steuerung der Kanal-Mikrospiegeln (430) sorgt; und
f) eine Vielzahl von faseroptischen Kopplern (420-1-C bis 420-N-C), die mit den Ausgangsports gekoppelt sind, zum Abzweigen von vorgegebenen Abschnitten der Spektralkanäle und zum Bereitstellen dieser Bereiche an den Spektralleistungs-Monitor für die überwachung der Leistungspegel.

2. Optische Vorrichtung nach Anspruch 1, ferner umfassend einen optischen Kombinierer (596) für den Empfang der abgezweigten vorgegebenen Bereiche des Spektralkanals von den faseroptischen Kopplern und für das Kombinieren der abgezweigten vorgegebenden Abschnitten zur Erzeugung einer kombinierten Ausgabe; und einen optischen Schalter (595), der für den Empfang der kombinieren Ausgabe und eines weiteren separat abgezweigten Abschnitts eines Spektralkanals und für die Steuerung der Weitergabe der kombinierten Ausgabe bzw. des separat abgezweigten vorgegebenen Abschnitts an den Spektralleistungs-Monitor (460) geeignet ist.

3. Optische Vorrichtung nach Anspruch 1 oder 2, wobei die Servosteueranordnung (440) geeignet ist, die optischen Leistungspegel auf einem vorgegebenen Wert zu halten.

4. Optische Vorrichtung nach einem der vorhergehenden Ansprüche, wobei jeder Kanal-Mikrospiegel (103) um zumindest eine Achse schwenkbar ist.

5. Optische Vorrichtung nach einem der vorhergehenden Ansprüche, ferner umfassend einen Strahlenfokussierer (102), der die Spektralkanäle zu entsprechenden fokussierten Punkten fokussiert.

6. Optische Vorrichtung nach Anspruch 5, wobei der Strahlenfokussierer (102) eine oder mehrere Fokussierlinsen umfasst.

7. Optische Vorrichtung nach einem der vorhergehenden Absprüche, wobei der Wellenlängenseparator (101) ein Element umfasst, das aus der Gruppe ausgewählt wurde, die besteht aus geteilten Beugungsgittem, holographischen Gittern, Echellegittern, Transmissionsgittern, gekrümmten Diffraktionsgittern und Dispersionsprismen.

8. Optische Vorrichtung nach einem der vorhergehenden Ansprüche, ferner umfassend eine Viertelwellenplatte (104), die optisch zwischen den Wellenlängenseparator (101) und die Kanal-Mikrospiegel (103) geschaltet ist.

9. Optische Vorrichtung nach einem der vorhergehenden Ansprüche, wobei die Ausgangsports (110-2 bis 110-N) einen Pass-Through-Port und einen oder mehrere Drop-Ports umfassen, wobei die Kanal-Mikrospiegel (103) ein Subset von Spektralkanälen in den Pass-Through-Port lenken, um für ein Pass-Through-Signal zu sorgen, und wobei die optische Vorrichtung ferner einen optischen Kombinierer (650) zum Kombinieren des Pass-Through-Signals mit einem oder mehrere Add-Spektralkanälen.

10. Optische Vorrichtung nach einem der vorhergehenden Anspräche, wobei die Faserkollimatoren (110) in einem eindimensionalen Eingangs-Ausgangsport-Feld (575) angeordnet sind, umfassend den Eingangsport (525) für das optische Multiwellenlängensignal und eine Vielzahl von Add-Ports (545-1 bis 545-N), wobei das Eingangs-Ausgangsport-Feld derart konfiguriert ist, dass jeder Drop-Port einen mit diesem gepearten Add-Port (565-1 bis 565-N) hat, wobei jeder Kanal-Mikrospiegel (103) in der Lage ist, einen Spektralkanal von dem optischen Multiwellenlängensignal in einen Drop-Port (545-1 bis 545-N) und einen Add-spektralkanal von einem mit diesem gepaarten Add-Port (565-1 bis 565-N) in den Pass-Through-Port zu reflektieren.

11. Optische Vorrichtung nach Anspruch 13, wobei das Eingangs-Ausgangsport-Feld (575) alternierende Eingangs-Ausgangs-Ports umfasst.

## Revendications

1. Appareil de séparation-routage de longueur d'onde optique comprenant :
a) des collimateurs à fibres multiples (110) fournissant un port d'entrée (110-1) pour un signal optique à longueurs d'onde multiples et une pluralité de ports de sortie (110-2 à 110-N) ;
b) un séparateur de longueur d'onde (101) qui sépare ledit signal optique à longueurs d'ondes multiples par longueur d'onde en bandes spectrales multiples ; et
c) un commutateur comprenant des micro-miroir de bandes multiples (103) qui pivotent de manière individuelle et continue pour renvoyer lesdites bandes spectrales par ledit séparateur de longueurs d'onde (101) dans des ports de sortie sélectionnés (110-2 à 110-N) ; **caractérisé en ce que**
d) ledit commutateur comprend un réseau de micro-miroirs de bande (103) positionnés de sorte que chaque micro-miroirs de bande (103-1 à 103-N) reçoive une bande spectrale unique parmi lesdites bandes spectrales ;
e) un ensemble de servocommande (140), en communication avec lesdits micro-miroirs de bande (430) et lesdits ports de sortie (420), pour assurer la commande desdits micro-miroirs de bande (430) et maintenir ainsi un couplage prédéterminé de chaque bande spectrale réfléchie dans un port unique desdits ports de sortie (420), où ledit ensemble de servocommande (440) comprend un moniteur de puissance spectrale (460) pour surveiller les niveaux de puissance optique desdites bandes spectrales couplées dans lesdits ports de sortie, et une unité de traitement (470) sensible auxdits niveaux de puissance optique pour assurer la commande desdits micro-miroirs de bande (430) ; et
f) une pluralité de coupleurs de fibres optiques (420-1-C à 420-N-C) couplés auxdits ports de sortie pour prélever des parties prédéterminées desdites bandes spectrales et fournir ces parties audit moniteur de puissance spectrale pour surveiller lesdits niveaux de puissance.

2. Appareil optique selon la revendication 1, comprenant en outre un combineur optique (596) pour recevoir lesdites parties prédéterminées prélevées desdites bandes spectrales provenant desdits coupleurs de fibres optiques et combiner lesdites parties prédéterminées prélevées pour produire une sortie combinée ; et un commutateur optique (595) adapté pour recevoir ladite sortie combinée et une autre partie prédéterminée prélevée séparément d'une bande spectrale, et adapté pour commander le passage de ladite sortie combinée ou de ladite partie prédéterminée prélevée séparément vers le moniteur de puissance spectrale (460).

3. Appareil optique selon la revendication 1 ou 2, dans lequel ledit ensemble de servocommande (440) est adapté pour maintenir lesdits niveaux de puissance optique à une valeur prédéterminée.

4. Appareil optique selon l'une quelconque des revendications précédentes, dans lequel chaque micro-miroir de bande (103) peut pivoter autour d'au moins un axe.

5. Appareil optique selon l'une quelconque des revendications précédentes, comprenant en outre un focaliseur de faisceaux (102) qui focalise lesdites bandes spectrales dans des points focalisés correspondants.

6. Appareil optique selon la revendication 5, dans lequel ledit focaliseur de faisceaux (102) comprend une ou plusieurs lentilles de focalisation.

7. Appareil optique selon l'une quelconque des revendications précédentes, dans lequel ledit séparateur de longueurs d'onde (101) comprend un élément choisi parmi le groupe consistant en réseau de diffraction réglé, réseau de diffraction holographique, réseau d'échelle, réseau de transmission, réseau de diffraction incurvé, et prisme de dispersion.

8. Appareil optique selon l'une quelconque des revendications précédentes, comprenant en outre une plaque quart d'onde (104) intercalée optiquement entre ledit séparateur de longueurs d'onde (101) et lesdits micro-miroirs de bande (103).

9. Appareil optique selon l'une quelconque des revendications précédentes, dans lequel lesdits ports de sortie (110-2 à 110 N) comprennent un port d'interconnexion et un ou plusieurs ports d'extraction, où lesdits miroirs de bande (103) dirigent un sous-ensemble desdites bandes spectrales dans ledit port d'interconnexion pour fournir un signal d'interconnexion, et où ledit appareil optique comprend en outre un combineur optique (650) pour combiner ledit signal d'interconnexion avec une ou plusieurs bandes spectrales d'insertion.

10. Appareil optique selon l'une quelconque des revendications précédentes, dans lequel lesdits collimateurs de fibres (110) sont agencés dans un réseau unidimensionnel de ports d'entrée-sortie (575), comprenant ledit port d'entrée (525) pour ledit signal optique à longueurs d'onde multiples et une pluralité de ports d'insertion (565-1 à 565-N), et des ports de sortie multiples fournissant un port d'interconnexion (535) et une pluralité de ports d'extraction (545-1 à 545-N), où ledit réseau de ports d'entrée-sortie est configuré de sorte que chaque port d'extraction (545-1 à 545-N) possède un port d'insertion d'appariement (565-1 à 565-N), grâce à quoi chaque micro-miroir de bande (103) est capable de renvoyer une bande spectrale provenant dudit signal optique à longueurs d'onde multiples dans un port d'extraction (545-1 à 545-N) et une bande spectrale supplémentaire provenant d'un port d'insertion d'appariement (565-1 à 565-N) dans ledit port d'interconnexion (535).

11. Appareil optique selon la revendication 13, dans lequel ledit réseau de ports d'entrée-sortie (575) comprend des ports d'entrée et de sortie alternés.
